(19) **Europäisches Patentamt / European Patent Office / Office européen des brevets**

(11) **EP 3 166 057 B1**

(12) **EUROPEAN PATENT SPECIFICATION**

(45) Date of publication and mention of the grant of the patent:
**30.11.2022 Bulletin 2022/48**

(21) Application number: **16196463.0**

(22) Date of filing: **28.10.2016**

(51) International Patent Classification (IPC):
**G06Q 10/06** $^{(2012.01)}$

(52) Cooperative Patent Classification (CPC):
**G06Q 10/067; G06F 30/20; G06Q 10/06;**
G06Q 10/0637

(54) **PLANT MODEL CREATING DEVICE, PLANT MODEL CREATING METHOD, AND NON-TRANSITORY COMPUTER READABLE STORAGE MEDIUM**

ANLAGENMODELLERZEUGUNGSVORRICHTUNG, ANLAGENMODELLERZEUGUNGSVERFAHREN UND ÜBERGANGSLOSES COMPUTERLESBARES SPEICHERMEDIUM

DISPOSITIF DE CRÉATION DE MODÈLE DE PLANTE, PROCÉDÉ DE CRÉATION DE MODÈLE DE PLANTE ET SUPPORT DE STOCKAGE NON TRANSITOIRE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2015 JP 2015217814**

(43) Date of publication of application:
**10.05.2017 Bulletin 2017/19**

(73) Proprietor: **Yokogawa Electric Corporation**
**Tokyo 180-8750 (JP)**

(72) Inventors:
• **Ohara, Kenichi**
**Tokyo, 180-8750 (JP)**
• **Kamada, Ken'ichi**
**Tokyo, 180-8750 (JP)**
• **Aoki, Jun**
**Tokyo, 180-8750 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A1- 2 144 197    EP-A1- 2 840 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Fields

The disclosure relates to a plant model creating device, a plant model creating method, and a non-transitory computer readable storage medium.

Priority is claimed on Japanese Patent Application No. 2015-217814, filed November 5, 2015.

Related Art

An operation plan creating system which creates an operation plan of a plant for realizing energy saving and cost saving is known (for example, Japanese Unexamined Patent Application Publication No. 2015-62102). The operation plan created by the operation plan creating system includes start/stop of equipment in the plant and a time series trend of input/output values. Therefore, in order to create an operation plan which can save energy and cost of the entire plant, it is necessary to create a model of the plant based on input/output characteristics of equipment and operation restrictions.

However, in order to create a model of the plant, special knowledge, such as knowledge of physics/thermodynamics/chemical-engineering about equipment, knowledge of data-analysis/statistics, knowledge of optimization problems (for example, mathematical programming), and knowledge of programming, is needed. For this reason, quality of the model of the plant is greatly dependent on the knowledge level of an engineer who creates the model.

Especially, it is necessary to comprehensively define characteristic formulas and restriction conditions related to equipment in order to create the model of the plant more precisely. However, even if the engineer has a high knowledge level, it is difficult to define characteristic formulas and restriction conditions with respect to equipment.

In recent years, in order to save energy of a plant, "supply-demand bidirectional cooperation" for suppressing use of fossil fuel by reusing, as fuel, by-products discharged by production process is performed. For this reason, since the model of the plant is increased in size and complicated, there is a case that a large number of man-hours are required for creating the model.

EP 2 144 197 A1 provides systems and methods for constructing plans that can be executed in a production plant to achieve one or more production goals while concurrently facilitating diagnostic information gain.

SUMMARY

Accordingly, there is provided a plant model creating device as set out in independent claim 1, a plant model creating method as set out in independent claim 8, and a non-transitory computer readable storage medium as set out in independent claim 15. Advantageous developments are defined in the dependent claims.

Further features and aspects of the present disclosure will become apparent from the following detailed description of exemplary embodiments with reference to the attached drawings.

BRIEF DESCRIPTION OF THE DRAWINGS

FIG. 1 is a block diagram illustrating a whole configuration of a system which includes an energy management system 1, a controlling/monitoring system 50, and a plant 60.
FIG. 2 is a block diagram illustrating a detail configuration of the operation plan creating system 10.
FIG. 3 is a block diagram illustrating a detail configuration of the plant model creating device 100.
FIG. 4 is a drawing illustrating an example of the operating data 181.
FIG. 5 is a drawing illustrating an example of the energy flow diagram 193.
FIG 6 is a drawing illustrating an example of the $\chi$-square distribution created by the outlier remover 131.
FIG. 7 is a drawing illustrating an example of the operating data 181 clustered by the cluster analyzer 132.
FIG. 8 is a drawing illustrating an example of a first principal component axis AX.
FIG. 9 is a drawing illustrating an example of the principal component list 183 with respect to a certain cluster.
FIG. 10 is a drawing illustrating an example of the plane P1.
FIG. 11 is a drawing illustrating an example of the plane P2.
FIG. 12 is a drawing illustrating an example of the piecewise linear approximate formula generated by the model creator 140.
FIG. 13 is a drawing illustrating an example of time series trend of input/output amount of equipment.

FIG. 14 is a drawing illustrating an example of Gantt chart of operation showing start/stop of equipment.

FIG. 15 is a drawing illustrating an example of a cost-saving merit.

FIG. 16 is a flow chart showing an operation plan creation processing executed by the operation plan creating system 10.

## DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a plant model creating device, a plant model creating method, and a non-transitory computer readable storage medium which can comprehensively extract characteristic formulas and restriction conditions related to equipment based on operating data of a plant, and can accurately create a model of the plant by a small number of man-hours without special knowledge.

Hereinafter, a plant model creating device, a plant model creating method, and a non-transitory computer readable storage medium of embodiments will be described with reference to drawings.

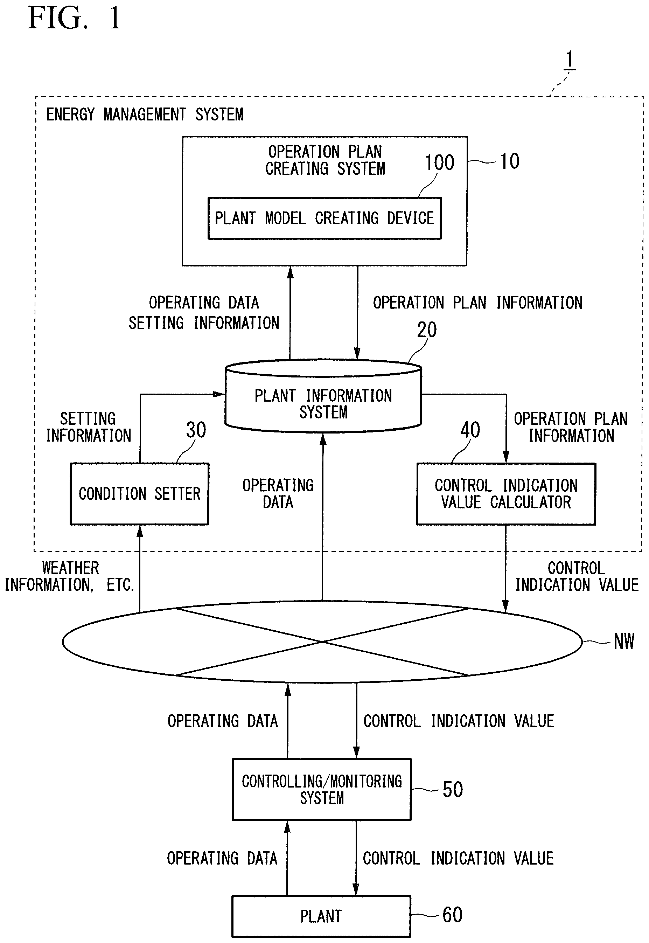

FIG. 1 is a block diagram illustrating a whole configuration of a system which includes an energy management system 1, a controlling/monitoring system 50, and a plant 60. As shown in FIG. 1, the energy management system 1 is connected to a network NW. Although the network NW is a wired network such as Ethernet (registered trademark), the network NW may be a wireless network which can perform wireless communication in conformity with wireless communication standards, such as Wi-Fi (registered trademark), WiMAX (registered trademark), 3G/LTE (registered trademark), and so on.

The energy management system 1 is equipped with an operation plan creating system 10, a plant information system 20, a condition setter 30, and a control indication value calculator 40. The operation plan creating system 10 is a system which creates an operation plan of the plant 60. The plant information system 20 is a system which manages information of the plant 60. The condition setter 30 is a device which sets various types of conditions about operation of the plant 60. The control indication value calculator 40 is a device which calculates a control indication value for controlling various types of equipment installed in the plant 60.

The controlling/monitoring system 50 is a system which monitors a control of the plant 60 and a state of the plant 60. The plant 60 includes an industrial plant such as a chemical industrial plant, a plant managing and controlling a wellhead (for example, a gas field and an oil field), a plant managing and controlling a generation of electric power (for example, hydro power, thermal power, and nuclear power), a plant managing and controlling a power harvesting (for example, solar power and wind power), a plant managing and controlling water supply and sewerage systems, a dam, and so on.

For example, the controlling/monitoring system 50 and the plant 60 are connected to a wired industrial network which is in conformity with HART (registered trademark), FieldBus, or the like, but not limited thereto. For example, the controlling/monitoring system 50 and the plant 60 may be connected to a wireless industrial network which is in conformity with ISA100.11a, WirelessHART (registered trademark), or the like.

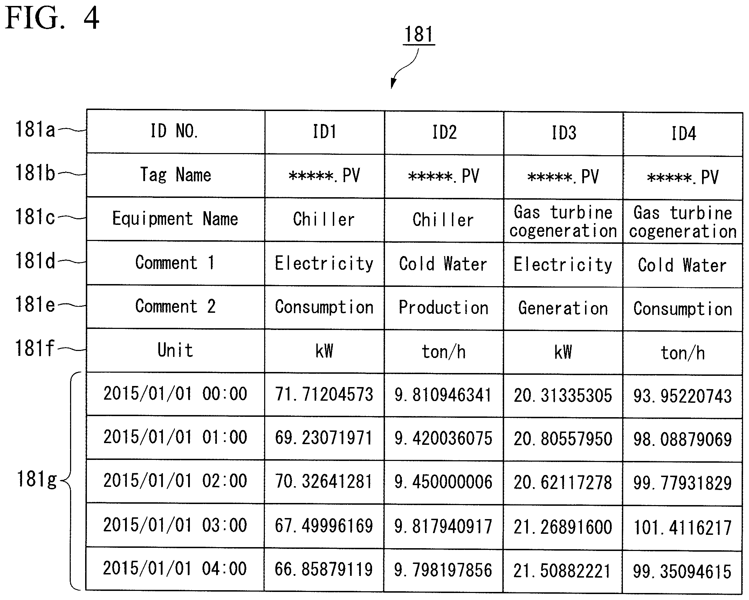

The plant 60 transmits, to the controlling/monitoring system 50, operating data of various types of equipment installed in the plant 60. Details of the operating data will be described later with reference to FIG. 4. The controlling/monitoring system 50 transmits the operating data, which has been received from the plant 60, to the plant information system 20 through the network NW.

On the other hand, the condition setter 30 receives weather information (temperature information, humidity information, and so on) from a server of a weather forecast distribution company (not illustrated) through the network NW. The condition setter 30 stores production-plan/energy-demand information, charge-unit-cost/$CO_2$ conversion coefficient, and so on. The condition setter 30 transmits, to the plant information system 20, the weather information, the production-plan/energy-demand information, the charge-unit-cost/$CO_2$ conversion coefficient, and so on, as setting information.

The plant information system 20 transmits, to the operation plan creating system 10, the operating data of the plant 60 received from the controlling/monitoring system 50 and the setting information (the weather information, the production-plan/energy-demand information, the charge-unit-cost/$CO_2$ conversion coefficient, and so on) received from the condition setter 30.

The operation plan creating system 10 is equipped with a plant model creating device 100. The plant model creating device 100 creates a model of the plant 60 by using the operating data of the plant 60 received from the plant information system 20. The operation plan creating system 10 generates operation plan information which represents an operation plan of the plant 60 based on the model created by the plant model creating device 100 and the setting information received from the plant information system 20. The operation plan creating system 10 transmits the generated operation plan information to the plant information system 20.

The plant information system 20 transmits, to the control indication value calculator 40, the operation plan information received from the operation plan creating system 10. The control indication value calculator 40 calculates a control indication value for controlling various types of equipment installed in the plant 60 based on the operation plan information received from the plant information system 20. The control indication value calculator 40 transmits the calculated control indication value to the controlling/monitoring system 50 through the network NW.

The controlling/monitoring system 50 controls various types of equipment installed in the plant 60 based on the control indication value received from the control indication value calculator 40. The plant 60 transmits operating data of the various types of equipment installed in the plant 60 to the controlling/monitoring system 50. The operation described above is a sequential operation of the whole system.

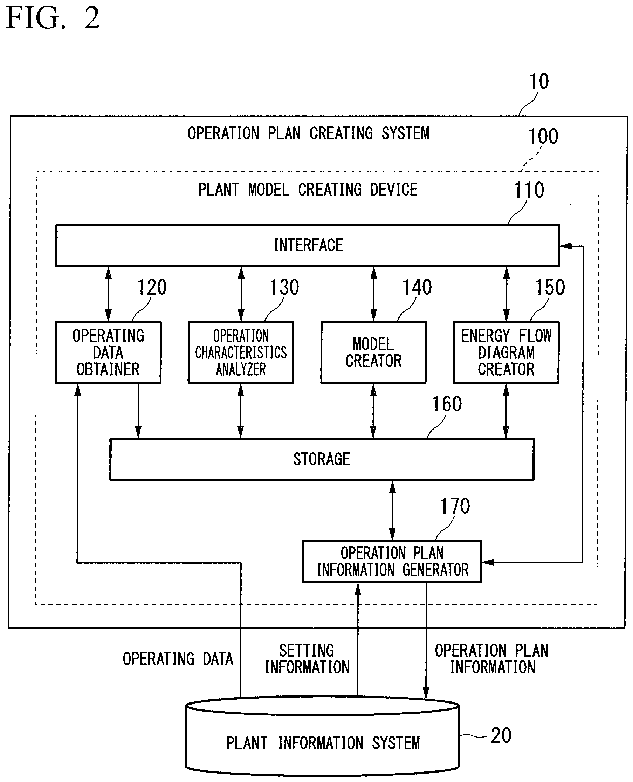

FIG. 2 is a block diagram illustrating a detail configuration of the operation plan creating system 10. The plant model creating device 100 prepared in the operation plan creating system 10 is equipped with an interface 110, an operating data obtainer 120, an operation characteristics analyzer 130, a model creator 140, an energy flow diagram creator 150, storage 160, and an operation plan information generator 170.

The interface 110 is a user interface which has a display device such as a liquid crystal display, and an input device such as a keyboard and a mouse. The interface 110 performs input/output of information with respect to the operating data obtainer 120, the operation characteristics analyzer 130, the model creator 140, and the energy flow diagram creator 150.

The operating data obtainer 120, the operation characteristics analyzer 130, the model creator 140, and the energy flow diagram creator 150 are implemented by a processor, such as CPU (Central Processing Unit), executing a program stored in the storage 160. The operating data obtainer 120, the operation characteristics analyzer 130, the model creator 140, and the energy flow diagram creator 150 may be implemented by hardware, such as an LSI (Large Scale Integration) and an ASIC (Application Specific Integrated Circuit), which has the same function as the processor executing the program.

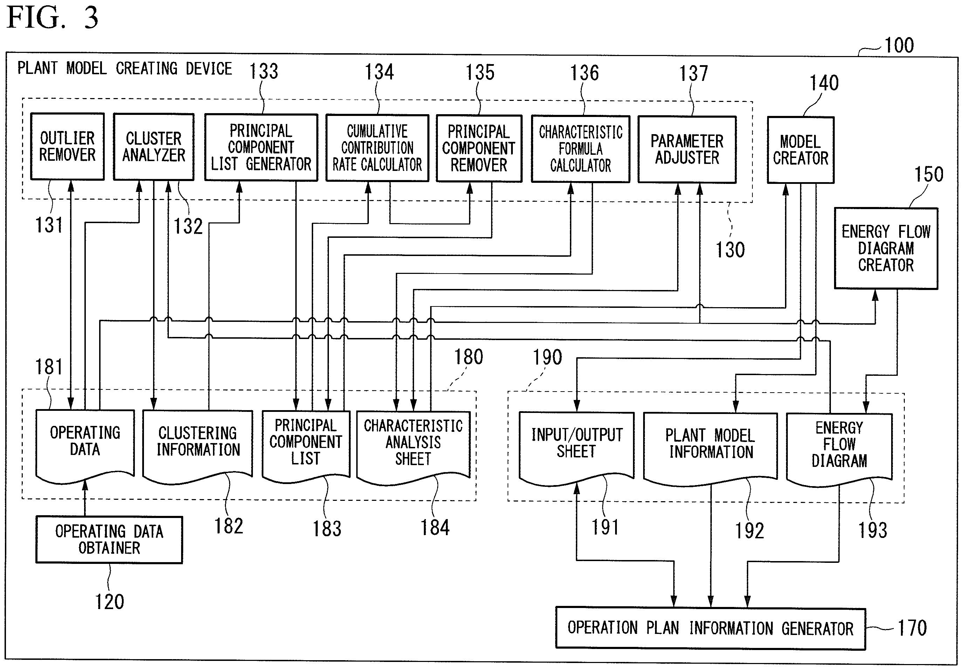

The operating data obtainer 120 obtains the operating data of the plant 60 from the plant information system 20. The operation characteristics analyzer 130 analyzes operation characteristics of equipment installed in the plant 60. The model creator 140 creates a model of the plant 60. The energy flow diagram creator 150 creates an energy flow diagram. Details of operation of the operating data obtainer 120, the operation characteristics analyzer 130, the model creator 140, and the energy flow diagram creator 150 will be described later with reference to FIG. 3.

The storage 160 is a memory used by the operating data obtainer 120, the operation characteristics analyzer 130, the model creator 140, the energy flow diagram creator 150, and the operation plan information generator 170. For example, the storage 160 may be implemented by a ROM (Read Only Memory), a RAM (Random Access Memory), a HDD (Hard Disk Drive), a flash memory, or the like.

The operation plan information generator 170 receives the setting information from the plant information system 20, and generates operation plan information with reference to the information stored in the storage 160. Details of a method of generating the operation plan information will be described later with reference to FIG. 3. The operation plan information generator 170 transmits the generated operation plan information to the plant information system 20.

FIG. 3 is a block diagram illustrating a detail configuration of the plant model creating device 100. The operation characteristics analyzer 130 is equipped with an outlier remover 131, a cluster analyzer 132, a principal component list generator 133, a cumulative contribution rate calculator 134, a principal component remover 135, a characteristic formula calculator 136, and a parameter adjuster 137.

A characteristic analysis component 180 and a plant model component 190 are information stored in the storage 160. The characteristic analysis component 180 includes an operating data 181 of the plant 60, a clustering information 182, a principal component list 183, and a characteristic analysis sheet 184. The plant model component 190 includes an input/output sheet 191, plant model information 192, and an energy flow diagram 193.

FIG. 4 is a drawing illustrating an example of the operating data 181. As shown in FIG. 4, the operating data 181 includes ID number data 181a, tag name data 181b, equipment name data 181c, comment data 181d and 181e, unit data 181f, and measurement data 181g.

In FIG. 4, the ID number data 181a represents an ID number allocated for each tag of the operating data 181 obtained from the plant information system 20. The tag name data 181b represents a tag name of the operating data which is a measurement target of equipment, and the tag name data 181b is stored in the plant information system 20. The equipment name data 181c represents a name of equipment installed in the plant 60. The comment data 181d represents a measurement target of equipment, such as electricity and cold water. The comment data 181e represents data related to the measurement target of equipment, such as consumption, production, and generation. The unit data 181f represents a unit of the measurement data 181g. The measurement data 181g represents data measured by equipment installed in the plant 60.

The operating data obtainer 120 stores, in the storage 160, the operating data 181 of the plant 60 obtained from the plant information system 20. The energy flow diagram creator 150 reads the operating data 181 of the plant 60 out of the storage 160, and creates the energy flow diagram 193 representing the customer's plant 60 by using the operating data 181 read out of the storage 160. Specifically, the energy flow diagram creator 150 creates the energy flow diagram 193 by using general graphic software (for example, Microsoft Visio (registered trademark)) based on instructions of a user from the interface 110.

As a stencil of the graphic software, nine basic object icons (for example, an equipment type object, a sauce/storage type object, a demand/balance type object, a sensor type object, an object for defining restriction condition, a link object between pages, a hierarchy type object, a connector for energy flow, and a connector for obtaining information) are registered beforehand. The energy flow diagram creator 150 creates the energy flow diagram 193 by using these basic object icons.

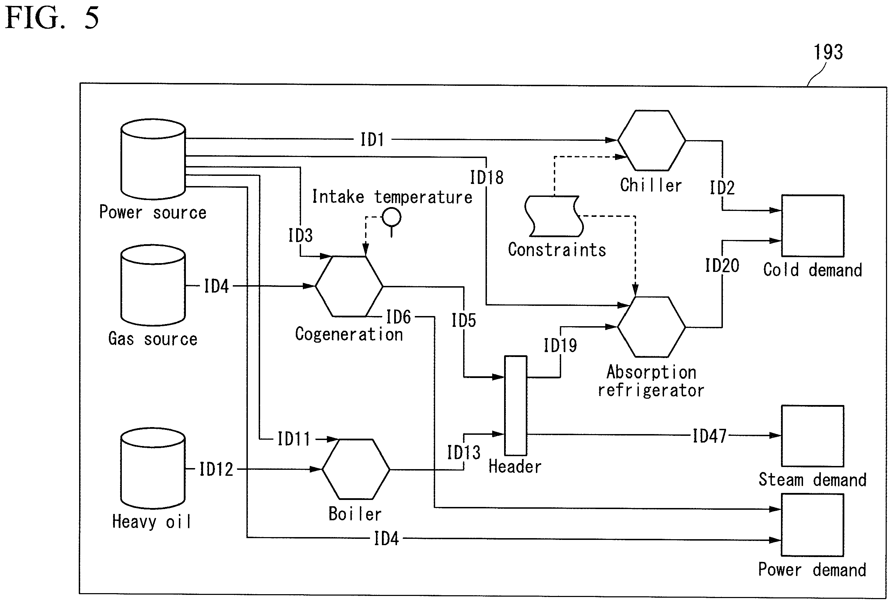

FIG. 5 is a drawing illustrating an example of the energy flow diagram 193. As shown in FIG. 5, the energy flow diagram 193 is a diagram illustrating a plurality of equipment of the plant 60 connected by the connector for energy flow.

In the energy flow diagram 193, objects such as a boiler and a chiller are arranged. These objects are connected to each other by the connector for energy flow. An ID number of the operating data 181 is associated with the connector for energy flow. For example, the ID number of the operating data 181 can be associated with the connector for energy flow by dragging and dropping the ID number of the operating data 181 shown in FIG. 4 to the connector for energy flow. Thereby, the energy flow diagram creator 150 can create the energy flow diagram 193.

Next, if the user instructs an execution of "model creation" from the interface 110, creation processing of a plant model is started. In the creation processing of a plant model, in order to calculate an exact energy-saving potential, it is necessary to create an accurate model of which error (model error) between the operating data 181 and a model value is small. However, if many outliers (or abnormal values) caused by a failure of a measurement device are included in the operating data 181, it is difficult to create the accurate model. For this reason, the outlier remover 131 removes outliers from the operating data 181 beforehand.

The outlier remover 131 reads the operating data 181 of the plant 60 out of the storage 160, and removes outliers from the operating data 181 by using Mahalanobis distance. Specifically, the outlier remover 131 converts multivariate operating data X into the Mahalanobis distance D, based on the formula 1 described below, by using an average value $\mu$ thereof and a variance-covariance matrix V.

[Formula 1]

$$D^2(x_i) = (x_i - \mu)^T V^{-1}(x_i - \mu)$$

Next, the outlier remover 131 calculates a probability density function P, based on the formula 2 described below, by using the Mahalanobis distance D, and creates a $\chi$-square distribution.

[Formula 2]

$$P(D) = \begin{cases} \dfrac{D^{\frac{t}{2}-1} \cdot e^{-\frac{D}{2}}}{2^{\frac{t}{2}} \cdot \Gamma\left(\dfrac{t}{2}\right)} & \cdots D \geq 0 \\ 0 & \cdots D < 0 \end{cases}$$

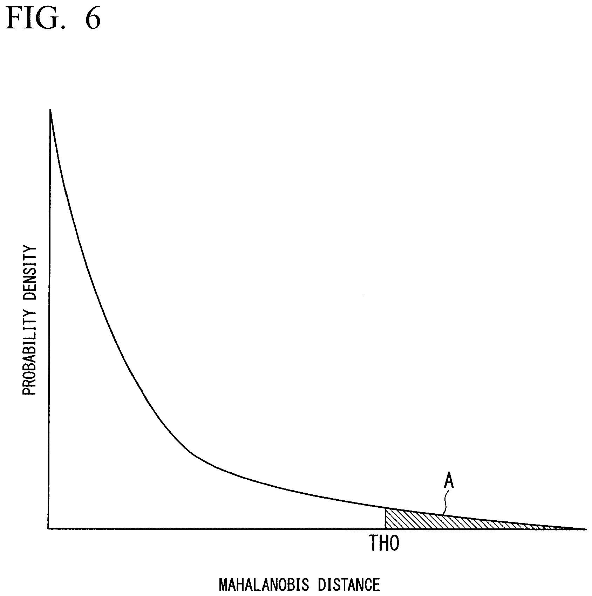

FIG 6 is a drawing illustrating an example of the $\chi$-square distribution created by the outlier remover 131. In FIG. 6, the horizontal axis shows the Mahalanobis distance D, and the vertical axis shows the probability density function P. The outlier remover 131 calculates, as a threshold TH0, a value corresponding to a ratio $\alpha$ (for example, 5%) of the area A of outliers to the area of the $\chi$-square distribution. The outlier remover 131 checks the Mahalanobis distance of all the data, and removes the data (outliers) exceeding the threshold value TH0 from the operating data 181. Thereafter, the outlier remover 131 stores, into the storage 160, the operating data 181 from which the outliers have been removed.

The cluster analyzer 132 performs clustering of the operating data 181. Specifically, the cluster analyzer 132 reads, out of the storage 160, the operating data 181 from which the outliers have been removed. Moreover, the cluster analyzer 132 divides the operating data 181 into groups (clusters) each of which shows the same tendency and pattern by fitting based on a Gaussian Mixture Model.

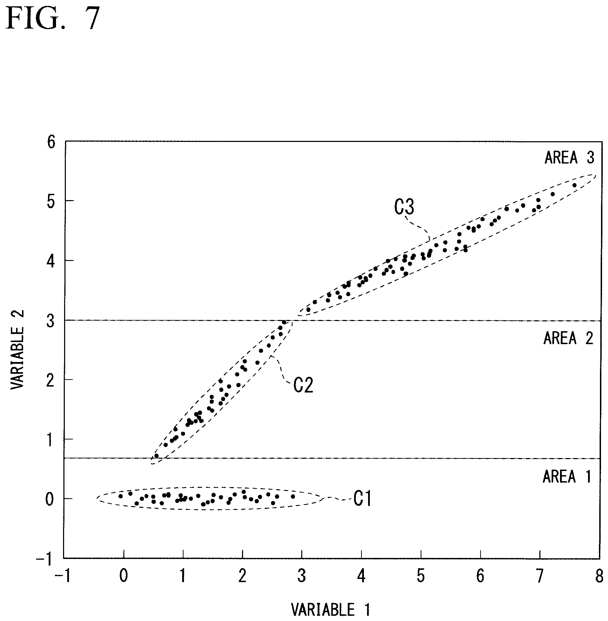

FIG. 7 is a drawing illustrating an example of the operating data 181 clustered by the cluster analyzer 132. In FIG. 7, the horizontal axis shows a variable 1 (for example, fuel amount) of the operating data 181, and the vertical axis shows a variable 2 (for example, power generation amount) of the operating data 181. In the example shown in FIG. 7, two variables are shown in order to understand easily, but the number of variables may be three or more.

The cluster analyzer 132 divides the operating data 181 until one cluster is classified to one area. The cluster analyzer 132 ends clustering when the division number reaches a maximum division number (for example, 10).

In the example shown in FIG. 7, the operating data 181 is divided into the three clusters C1 to C3, but not limited thereto. For example, the cluster analyzer 132 may divide the operating data 181 into four or more clusters. The cluster analyzer 132 stores the clusters C1 to C3, which have been divided from the operating data 181, into the storage 160 as the clustering information 182.

The principal component list generator 133 extracts a principal component based on the clustering information 182 generated by the cluster analyzer 132. Specifically, the principal component list generator 133 reads the operating data 181 and the clustering information 182 (clusters C1 to C3) out of the storage 160. Moreover, the principal component list generator 133 calculates a principal component of the cluster, which has been read out of the storage 160, by performing a Principal Component Analysis (PCA).

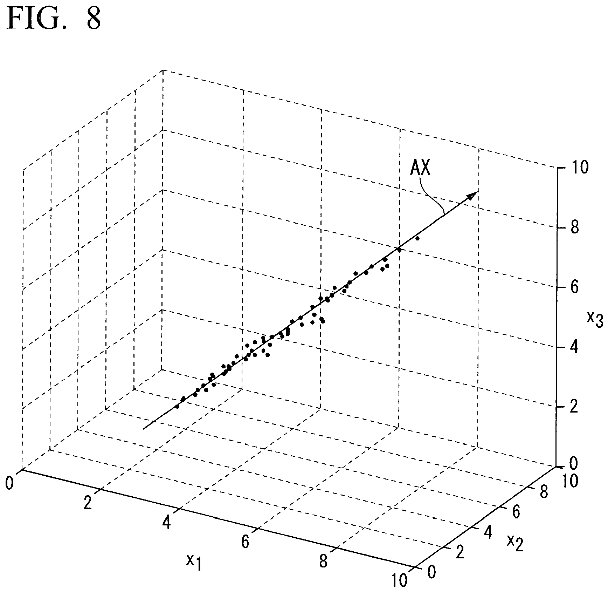

FIG. 8 is a drawing illustrating an example of a first principal component axis AX In the example shown in FIG. 8, three axes corresponding to three variables $x_1$ to $x_3$ are shown in order to understand easily, but the number of variables may be four or more.

The principal component list generator 133 applies the Principal Component Analysis (PCA) with respect to data $X'^{data}$ obtained by normalizing operating data $X^{data}$. The operating data $X^{data}$ is shown as the formula 3 described below. Here, "n" represents a number of ID numbers (a number of variables) associated with the connector for energy flow, and "I" represents a number of clustered clusters.

[Formula 3]

$$X^{data} = \left[ x_1^{data}, x_2^{data} \cdots, x_n^{data} \right]^T \in R^{N \times I}$$

The principal component list generator 133 calculates a principal component $C'_N$ ($C'_1$, $C'_2$, ..., $C'_n$) which satisfactorily explains the operating data by applying the Principal Component Analysis (PCA) to the normalized data $X'^{data}$.

The principal components of n number calculated by the principal component list generator 133 are perpendicular to each other. The principal component list generator 133 calculates a contribution rate CR based on the formula 4 described below.

The contribution rate CR is a value representing how much the principal component explains the operating data 181. Here, a eigenvalue $\lambda$ is a value representing a dispersion of the principal component.

[Formula 4]

$$CR(j) = \frac{\lambda_j}{\sum_{i=1}^{n} \lambda_i} = \frac{\lambda_j}{p} \qquad \because p = \sum_{i=1}^{n} \lambda_i$$

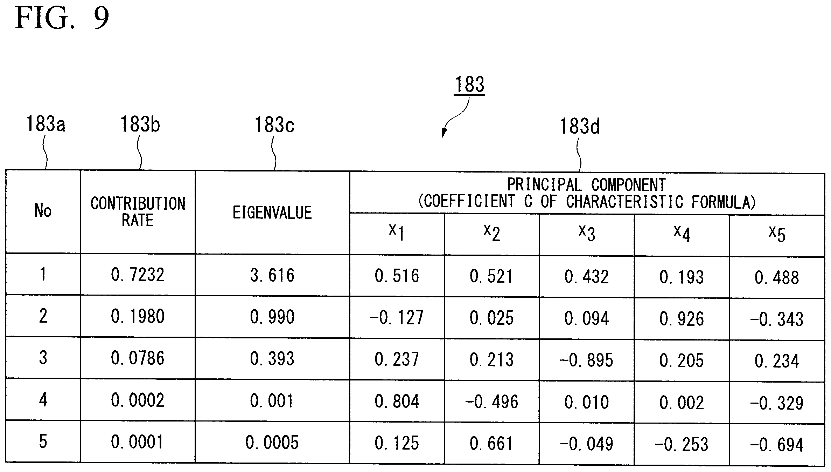

FIG. 9 is a drawing illustrating an example of the principal component list 183 with respect to a certain cluster. The principal component list 183 is a list including number data 183a of the principal component, contribution rate data 183b, eigenvalue data 183c, and principal component data 183d. The principal component list generator 133 extracts principal components in decreasing order of the contribution rate CR, and the principal component list generator 133 generates the principal component list 183. The principal component list generator 133 stores the generated principal component list 183 into the storage 160.

Next, the cumulative contribution rate calculator 134 reads the principal component list 183 out of the storage 160, and obtains the contribution rate CR in the principal component list 183. Thereafter, the cumulative contribution rate calculator 134 calculates a cumulative contribution rate CCR based on the formula 5 described below. The cumulative contribution rate calculator 134 outputs the calculated cumulative contribution rate CCR to the principal component remover 135.

[Formula 5]

$$CCR(j) = \sum_{i=1}^{j} CR(i) = \sum_{i=1}^{j} \frac{\lambda_i}{p}$$

The principal component remover 135 compares the cumulative contribution rate CCR calculated by the cumulative contribution rate calculator 134 with a first threshold value TH1 (for example, 0.95). The first threshold value TH1 is not limited to 0.95, and a suitable value may be set as the first threshold value TH1.

If the principal component remover 135 determines that the cumulative contribution rate CCR is less than the first threshold value TH1, the principal component remover 135 removes, from the principal component list 183, the principal component corresponding to the contribution rate CR added to the cumulative contribution rate CCR. The principal component remover 135 repeatedly performs this processing to remove principal components of which contribution rate CR is high. The principal component remover 135 stores, into the storage 160, the principal component list 183 in which a part of the principal components has been removed.

Hereinafter, an example of removal processing of principal component will be described. Five principal components are included in the principal component list 183 shown in FIG. 9. First, the cumulative contribution rate calculator 134 calculates a first cumulative contribution rate CCR (the contribution rate of the first principal component) = 0.7232. Since the calculated first cumulative contribution rate CCR (0.7232) is less than the first threshold value TH1 (0.95), the principal component remover 135 removes the first principal component from the principal component list 183.

Next, the cumulative contribution rate calculator 134 calculates a second cumulative contribution rate CCR (the contribution rate of the first principal component + the contribution rate of the second principal component) = 0.7232 + 0.1980 = 0.9212. Since the calculated second cumulative contribution rate CCR (0.9212) is less than the first threshold value TH1 (0.95), the principal component remover 135 removes the second principal component from the principal component list 183.

Next, the cumulative contribution rate calculator 134 calculates a third cumulative contribution rate CCR (the contribution rate of the first principal component + the contribution rate of the second principal component + the contribution rate of the third principal component) = 0.7232 + 0.1980 + 0.0786 = 0.9998. Since the calculated third cumulative contribution rate CCR (0.9998) is more than the first threshold value TH1 (0.95), the principal component remover 135 stores, into the storage 160, the principal component list 183 in which the first principal component and the second principal component have been removed. Thereafter, characteristic formula calculation processing is performed by the characteristic formula calculator 136.

The characteristic formula calculator 136 reads the principal component list 183 out of the storage 160. The characteristic formula calculator 136 calculates, as a characteristic formula, an equation of a plane whose normal vector is a principal component $C'_K$ ($C'_1$, $C'_2$, ..., C\) of k number which remains in the principal component list 183. Here, the characteristic formula is shown as the formula 6 described below.

[Formula 6]

$$C'_k\left(X'_N\right) = \left[ c'_{k,1} \cdot x'_1 + c'_{k,2} \cdot x'_2 + \cdots + c'_{k,n} \cdot x'_n = 0 \right] \in R^{N \times I}$$

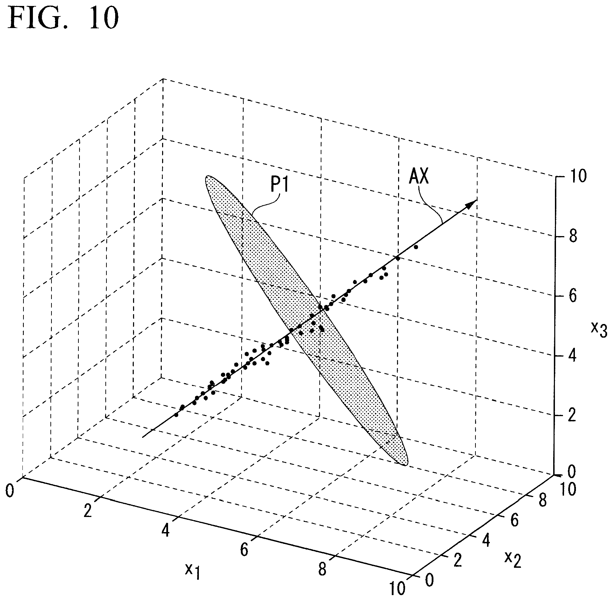

The principal component remover 135 removes an axis (for example, the first principal component axis AX) which satisfactorily explains the operating data 181 and whose contribution rate CR is high. This is because the operating data 181 is hardly included in the plane P1 which intersects perpendicularly with this principal component axis, as shown in FIG. 10.

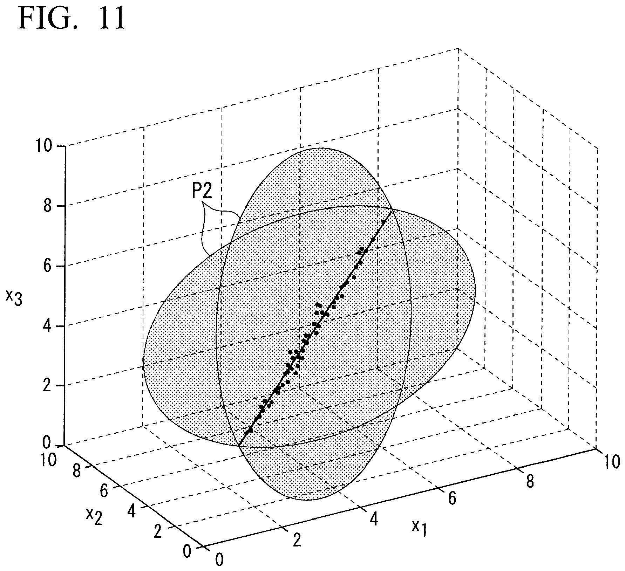

Therefore, as shown in FIG. 11, the characteristic formula calculator 136 can calculate the planes P2 including a lot of operating data 181 by using, as a normal vector, an axis of principal components which remain in the principal component list 183 and whose contribution rate CR is low.

The equations of the plane calculated by the characteristic formula calculator 136 are restriction condition formulas in which relation to each variable is represented by "= 0". For example, these formulas include a correlation formula between variables such as a balance of income and outgo, a relation formula whose physical characteristic is unknown, and so on, in addition to an input/output relation formula of equipment. For this reason, the characteristic formula calculator 136 can calculate comprehensively characteristic formulas related to equipment installed in the plant 60.

The calculated characteristic formulas are normalized. For this reason, the characteristic formula calculator 136 converts the calculated characteristic formula into a characteristic formula returned to real quantity before normalizing by using an average value m and a standard deviation s of the operating data 181, and the characteristic formula calculator 136 calculates a coefficient c and a bias b. Specifically, the characteristic formula calculator 136 performs the calculation shown in the formula 7 described below.

[Formula 7]

$$c_{k,1}(x_1 - m_1) + c_{k,2}(x_2 - m_2) + \cdots + c_{k,n}(x_n - m_n) = 0 \quad \because c_k = \frac{c_k'}{s}, \quad x' = x - m$$

$$\Rightarrow c_{k,1} \cdot x_1 + c_{k,2} \cdot x_2 + \cdots + c_{k,n} \cdot x_n + b_k = 0 \quad \because b_k = \sum_n -c_{k,n} \cdot m_n$$

If an error (model error) between an estimate value (model value) of the operating data calculated based on the characteristic formula and an actual measurement value of the operating data 181 is less than or equal to the second threshold value TH2 (for example, 1%), the operation characteristics analyzer 130 outputs the calculated characteristic formula to the characteristic analysis sheet 184, and ends the analysis. The characteristic analysis sheet 184 is a sheet generated by using general spreadsheet software (for example, Microsoft Excel (registered trademark)).

On the other hand, if the model error is greater than the second threshold TH2, the operation characteristics analyzer 130 increases an area division number of the operating data 181 divided by the cluster analyzer 132 from r to r+1, and the operation characteristics analyzer 130 calculates characteristic formulas again. The cluster analyzer 132 increases the area division number of the operating data 181 so that the model error can be decreased.

However, if a number of characteristic formulas calculated by increasing the area division number of clustering to r+1 is less than a number of characteristic formulas calculated when the area division number of clustering is r, it is considered that a characteristic, which had appeared, disappears because of subdividing data. For this reason, the operation characteristics analyzer 130 outputs, to the characteristic analysis sheet 184, a characteristic formula whose model error is minimum in the characteristic formulas obtained before and when the area division number of clustering is r, and ends the analysis. Similarly, if the area division number has reached a maximum value (for example, 10), the operation characteristics analyzer 130 outputs, to the characteristic analysis sheet 184, a characteristic formula whose model error is minimum in the characteristic formulas obtained before, and ends the analysis.

The parameter adjuster 137 adjusts parameters (for example, the coefficient c and the bias b) of the characteristic formula calculated by the characteristic formula calculator 136. For example, the parameter adjuster 137 reads, out of the storage 160, the operating data 181 in a period for calculating an energy-saving potential. Thereafter, the parameter adjuster 137 calculates the coefficient c and the bias b by using the operating data 181 read out of the storage 160. A nonlinear least-squares method is used as a method of calculating the coefficient c and the bias b.

If there are two or more characteristic formulas, restriction conditions are defined in order to maintain the characteristic formulas to be perpendicular to each other. The parameter adjuster 137 outputs, to the characteristic analysis sheet 184, the calculated coefficient c and the bias b with an upper limit value and a lower limit value of each variable, a model error, and so on. The parameter adjuster 137 may perform the parameter adjustment only when parameters of characteristic formulas need to be adjusted.

The model creator 140 obtains design information, such as the parameters (at least one of the coefficient c, the bias b, the upper limit value, and the lower limit value) and the characteristic formula, from the characteristic analysis sheet 184, and the model creator 140 creates a model of the plant 60. Since the obtained characteristic formula is defined for every cluster, the model creator 140 generates a piecewise linear approximate formula by unifying two or more characteristic formulas.

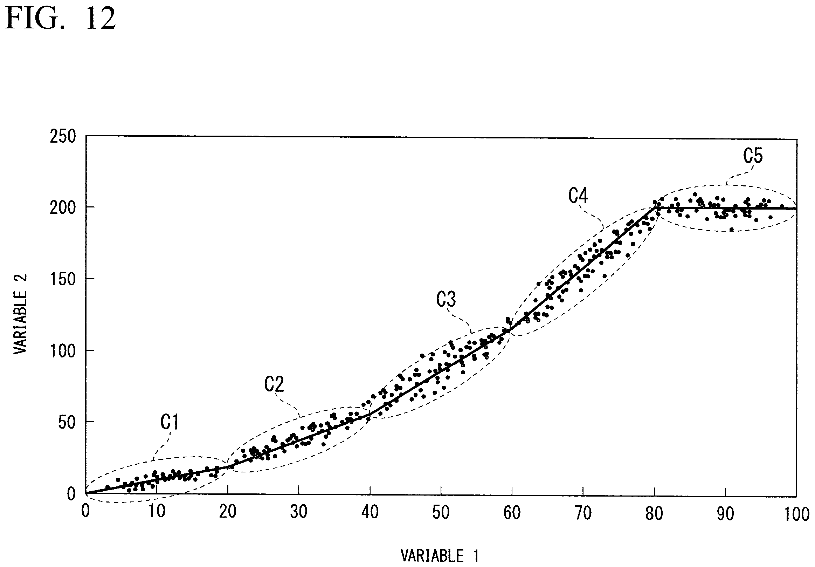

FIG. 12 is a drawing illustrating an example of the piecewise linear approximate formula generated by the model creator 140. In FIG. 12, the horizontal axis shows a variable 1 (for example, fuel amount) of the operating data 181, and the vertical axis shows a variable 2 (for example, power generation amount) of the operating data 181. In the example shown in FIG. 12, two variables are shown in order to understand easily, but the number of variables may be three or more.

As shown in FIG. 12, the model creator 140 unifies the characteristic formulas of the clusters C1 to C5, and generates a piecewise linear approximate formula. The model creator 140 stores, into the storage 160, the generated piecewise linear approximate formula as plant model information 192. Thereby, the model creator 140 can create an accurate model of the plant (plant model information 192).

The model creator 140 generates the input/output sheet 191 which is used for setting parameters and outputting an optimal solution, and the model creator 140 stores the generated input/output sheet 191 into the storage 160. The input/output sheet 191 is a sheet generated by using general spreadsheet software (for example, Microsoft Excel (registered trademark)).

The operation plan information generator 170 performs an optimization calculation based on instructions of the user from the interface 110. Specifically, the operation plan information generator 170 reads the energy flow diagram 193 and the plant model information 192 out of the storage 160. Thereafter, the operation plan information generator 170 compiles an executable file by using the energy flow diagram 193 and the plant model information 192 which have been read out of the storage 160. The operation plan information generator 170 reads the input/output sheet 191 out of the storage 160. Thereafter, the operation plan information generator 170 obtains parameters from the read input/output sheet 191, and creates a file.

Thereafter, the operation plan information generator 170 performs an optimization calculation. In the present embodiment, the operation plan information generator 170 can select either a rigorous solution method (Mixed Integer Linear Programming: MILP) or a high-speed approximate solution method (high-speed optimization method: HMPO) as an optimization method. The high-speed approximate solution method is an optimization method developed by the applicant (Japanese Unexamined Patent Application Publication No. 2015-62102: an operation plan creating method and an operation plan creating system).

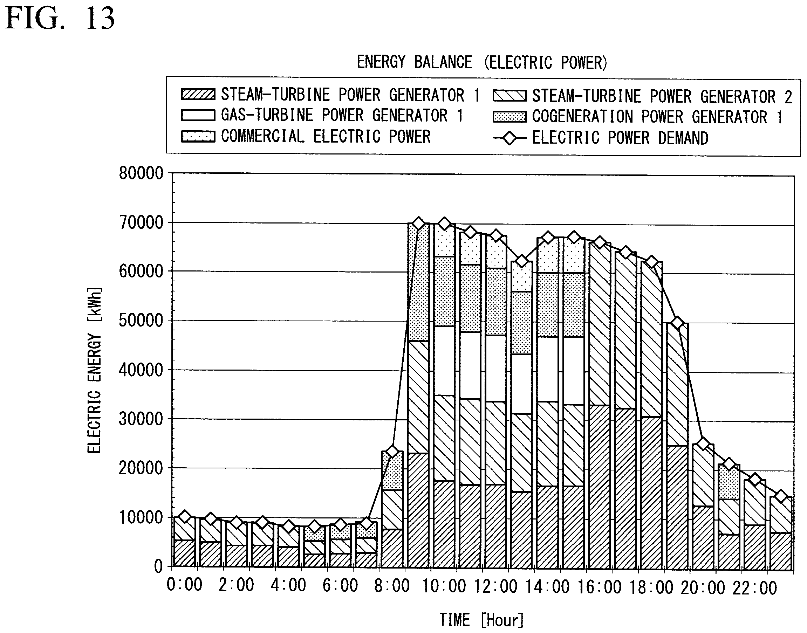

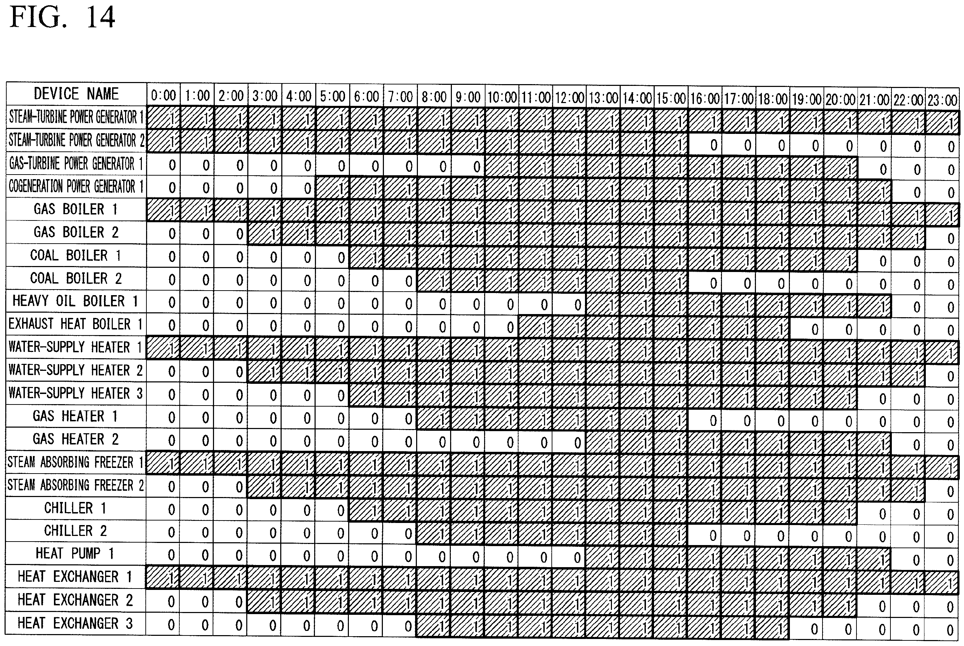

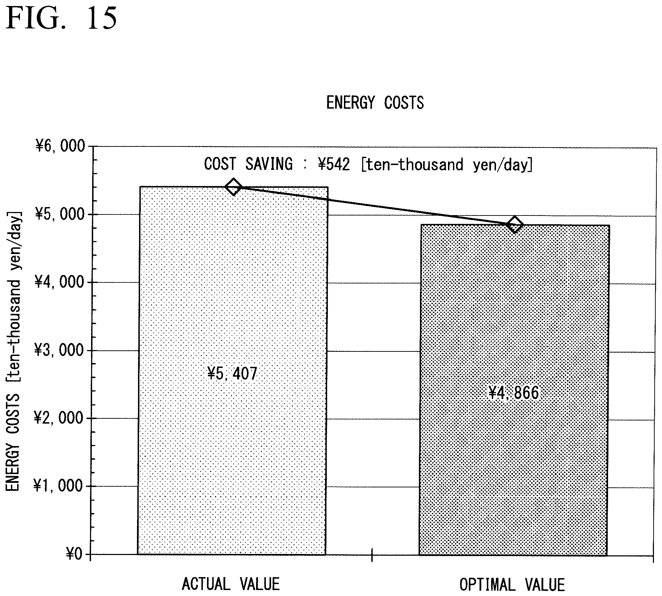

The operation plan information generator 170 executes the optimization calculation, and generates operation plan information including time series trend of input/output amount of equipment (FIG. 13), Gantt chart of operation showing start/stop of equipment (FIG. 14), and a cost-saving merit (FIG. 15). The operation plan information generator 170 transmits, to the plant information system 20, the generated operation plan information (the time series trend of input/output amount of equipment, the Gantt chart of operation, the cost-saving merit, and so on). Moreover, the operation plan information generator 170 outputs the generated operation plan information to the input/output sheet 191. The operation plan information generator 170 may generate an energy-saving merit with the cost-saving merit.

By performing the above-described processing, a model of the plant 60 can be created automatically. Thereby, the plant model creating device 100 can comprehensively extract characteristic formulas and restriction conditions related to equipment based on operating data of the plant, and the plant model creating device 100 can accurately create a model of the plant by a small number of man-hours without special knowledge.

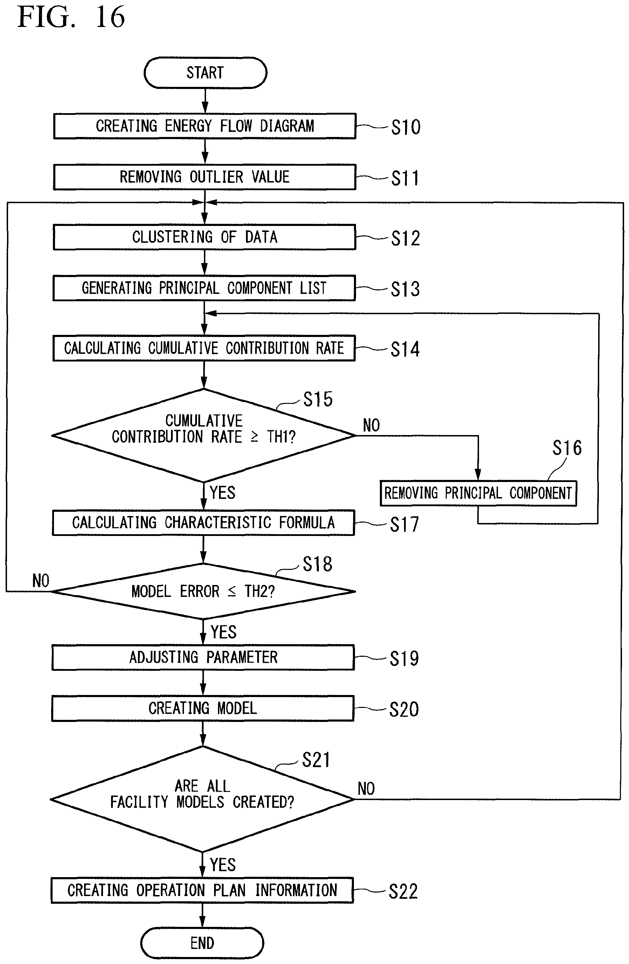

FIG. 16 is a flow chart showing an operation plan creation processing executed by the operation plan creating system 10. First, the energy flow diagram creator 150 creates an energy flow diagram 193 shown in FIG. 5 by using the operating data 181 of the plant 60 obtained by the operating data obtainer 120 (Step S10). Next, if a user instructs execution of "model creation" from the interface 110, creation processing (Step S11 to Step S21) of a plant model is started.

The outlier remover 131 removes outliers from the operating data 181 of the plant 60 by using Mahalanobis distance (Step S11). The cluster analyzer 132 clusters the operating data 181 (Step S12). Specifically, the cluster analyzer 132 generates clustering information 182 by dividing the operating data 181, from which outliers have been removed, into clusters by fitting based on a Gaussian Mixture Model.

The principal component list generator 133 calculates data including a principal component and a contribution rate CR for every cluster based on the clustering information 182 generated by the cluster analyzer 132. The principal component list generator 133 generates a principal component list 183 including the calculated data (Step S13). The cumulative contribution rate calculator 134 calculates a cumulative contribution rate CCR based on the principal component list 183 generated by the principal component list generator 133 (Step S14).

The principal component remover 135 determines whether the cumulative contribution rate CCR calculated by the cumulative contribution rate calculator 134 is less than the first threshold value TH1 or not (Step S15). If the cumulative contribution rate CCR is less than the first threshold value TH1 (Step S15: NO), the principal component remover 135 removes, from the principal component list 183, the principal component corresponding to the contribution rate CR added to the cumulative contribution rate CCR (Step S16), and the processing returns to the above-described Step S14.

If the cumulative contribution rate CCR is more than or equal to the first threshold value TH1 (Step S15: YES), the characteristic formula calculator 136 calculates a characteristic formula whose normal vector is the principal component included in the principal component list 183, and the characteristic formula calculator 136 outputs the calculated characteristic formula to the characteristic analysis sheet 184 (Step S17).

The operation characteristics analyzer 130 determines whether a model error representing an error between an estimate value (model value) of each variable calculated based on the characteristic formula and the operating data 181 is less than or equal to the second threshold value TH2 or not (Step S18). If the model error is larger than the second threshold value TH2 (Step S18: NO), the processing returns to the above-described Step S12.

If the model error is less than or equal to the second threshold value TH2 (Step S18: YES), the parameter adjuster 137 adjusts parameters included in the characteristic formulas calculated by the characteristic formula calculator 136, and the parameter adjuster 137 outputs, to the characteristic analysis sheet 184, the characteristic formula whose parameters have been adjusted (Step S19). The model creator 140 creates plant model information 192 representing a model of the plant 60 based on the characteristic formulas which have been output to the characteristic analysis sheet 184 (Step S20).

The operation characteristics analyzer 130 determines whether the plant model information 192 of all the equipment of the plant 60 has been created or not (Step S21). If the plant model information 192 of all the equipment of the plant 60 has not been created (Step S21: NO), the processing returns to the above-described Step S12.

If the plant model information 192 of all the equipment of the plant 60 has been created (Step S21: YES), the operation plan information generator 170 generates operation plan information (at least one of the time series trend of input/output amount of equipment, the Gantt chart of operation, the cost-saving merit, and so on) by using the energy flow diagram 193 created by the energy flow diagram creator 150 and the plant model information 192 created by the model creator 140 (Step S22), and the processing of this flow chart is ended.

The plant model creating device 100 in the above-described embodiment is equipped with a computer system. The procedures of processing performed by the plant model creating device 100 shown in FIG. 16 are stored in a non-transitory computer readable storage medium in a form of one or more programs, and various types of processing are executed by a computer by reading and executing this program. Here, the non-transitory computer readable storage medium is such as a magnetic disk, a magneto-optical disk, a CD-ROM, a DVD-ROM, a semiconductor memory, and so on. This program may be distributed to the computer through a communication line, and the computer which has received the program may execute the program.

As described above, the plant model creating device 100 includes the outlier remover 131, the cluster analyzer 132, the principal component list generator 133, the cumulative contribution rate calculator 134, the principal component remover 135, the characteristic formula calculator 136, and the model creator 140. The outlier remover 131 removes outliers from operating data 181 of a plant. The cluster analyzer 132 divides, into clusters, the operating data 181 from which the outliers have been removed. The principal component list generator 133 calculates a principal component and a contribution rate for every cluster. The principal component list generator 133 generates a principal component list 183 including the principal component and the contribution rate. The cumulative contribution rate calculator 134 calculates a cumulative contribution rate based on the principal component list. The principal component remover 135 removes, from the principal component list 183, a principal component corresponding to a contribution rate added to the cumulative contribution rate, if the cumulative contribution rate is less than a first threshold value TH1. The characteristic formula calculator 136 calculates a characteristic formula whose normal vector is the principal component included in the principal component list 183. The model creator 140 creates plant model information 192 based on the calculated characteristic formula. Thereby, the plant model creating device 100 can comprehensively extract characteristic formulas and restriction conditions related to equipment based on operating data of the plant, and the plant model creating device 100 can accurately create a model of the plant 60 by a small number of man-hours without special knowledge.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A plant model creating device (100) which is connectable to a plant information system (20) which manages information of a plant (60), the plant information system (20) being connected via a network (NW) to a controlling/monitoring system (50) controlling and monitoring the plant (60), the plant model creating device (100) comprising a hardware-processor executing one or more programs stored in a storage medium (160) to implement:

an operating data obtainer (120) configured to obtain, from the plant information system (20), operating data including measurement data measured by equipment installed in the plant (60), the measurement data representing a power consumption of a chiller, a cold water production amount of the chiller, a power generation amount of a gas turbine, or a cold water consumption of the gas turbine, the operating data being transmitted from the equipment to the controlling/monitoring system (50) and transmitted from the controlling/monitoring system (50) via the network (NW) to the plant information system (20);

an outlier remover (131) configured to calculate a Mahalanobis distance based on the operating data obtained by the operating data obtainer (120), and configured to remove outliers from the operating data based on the Mahalanobis distance;

a cluster analyzer (132) configured to divide, into clusters, the operating data from which the outliers have been removed by the outlier remover (131) by fitting based on a Gaussian Mixture Model;

a principal component list generator (133) configured to calculate a principal component by performing a Principal Component Analysis and configured to calculate a contribution rate using a dispersion of the principal component, for each of the clusters divided by the cluster analyzer (132), the principal component list generator (133) being configured to generate a principal component list (183) including the principal component and the contribution rate;

a cumulative contribution rate calculator (134) configured to obtain the contribution rate from the principal component list (183) generated by the principal component list generator (133), and configured to calculate a cumulative contribution rate based on the contribution rate obtained from the principal component list (183);

a principal component remover (135) configured to compare the cumulative contribution rate calculated by the cumulative contribution rate calculator (134) with a first threshold value, the principal component remover (135) being configured to remove, from the principal component list (183), a principal component corresponding to a contribution rate added to the cumulative contribution rate, if the cumulative contribution rate calculated by the cumulative contribution rate calculator (134) is less than the first threshold value;

a characteristic formula calculator (136) configured to calculate characteristic formulas for the clusters, a normal vector of each of the characteristic formulas representing the principal component included in the principal component list (183) from which the principal component corresponding to the contribution rate added to the cumulative contribution rate has been removed by the principal component remover (135); and

a model creator (140) configured to create a model of the plant (60) by unifying the characteristic formulas for the clusters calculated by the characteristic formula calculator (136), the model of the plant (60) being used for creating operation plan information which represents an operation plan of the plant (60),

wherein the plant model creating device (100) is configured to transmit the operation plan information to the plant information system (20).

2. The plant model creating device (100) according to claim 1, further comprising:

a parameter adjuster (137) configured to adjust parameters included in the characteristic formula calculated by the characteristic formula calculator (136),

wherein the model creator (140) is configured to create the model of the plant (60) based on the characteristic formula whose parameters has been adjusted by the parameter adjuster (137) .

3. The plant model creating device (100) according to claim 2,

wherein the parameter adjuster (137) is configured to adjust at least one of a coefficient and a bias which are included in the characteristic formula, and an upper limit value and a lower limit value of a variable included in the operating data.

4. The plant model creating device (100) according to any one of claims 1 to 3, further comprising:

an energy flow diagram creator (150) configured to create an energy flow diagram by using the operating data of the plant (60), the energy flow diagram showing energy flow between a plurality of equipment installed in the plant (60); and

an operation plan information generator (170) configured to generate operation plan information by using the energy flow diagram created by the energy flow diagram creator (150) and the model created by the model creator (140).

5. The plant model creating device (100) according to claim 4,

wherein the operation plan information generator (170) is configured to generate, as the operation plan information, at least one of time series trend of input/output amount of equipment installed in the plant (60), Gantt chart of operation showing start/stop of the equipment, and a cost-saving merit.

6. The plant model creating device (100) according to any one of claims 1 to 5, wherein if an error between an estimate value of the operating data calculated based on the characteristic formula and an actual measurement value of the operating data is greater than a second threshold, the cluster analyzer (132) increases a division number of the operating data and divides the operating data into clusters again.

7. The plant model creating device (100) according to any one of claims 1 to 6, wherein the model creator (140) is configured to generate, as the model of the plant (60), a piecewise linear approximate formula by unifying two or more characteristic formulas calculated by the characteristic formula calculator (136).

8. A plant model creating method which is performed by a plant model creating device (100) which is connectable to a plant information system (20) which manages information of a plant (60), the plant information system (20) being connected via a network (NW) to a controlling/monitoring system (50) controlling and monitoring the plant (60), the plant model creating method comprising:

    obtaining, from the plant information system (20), operating data including measurement data measured by equipment installed in the plant (60), the measurement data representing a power consumption of a chiller, a cold water production amount of the chiller, a power generation amount of a gas turbine, or a cold water consumption of the gas turbine, the operating data being transmitted from the equipment to the controlling/monitoring system (50) and transmitted from the controlling/monitoring system (50) via the network (NW) to the plant information system (20);
    calculating a Mahalanobis distance based on the operating data, and removing outliers from the operating data based on the Mahalanobis distance;
    dividing, into clusters, the operating data from which the outliers have been removed by fitting based on a Gaussian Mixture Model;
    calculating a principal component by performing a Principal Component Analysis, and calculating a contribution rate using a dispersion of the principal component, for every cluster;
    generating a principal component list (183) including the principal component and the contribution rate;
    obtaining the contribution rate from the principal component list (183), and calculating a cumulative contribution rate based on the contribution rate obtained from the principal component list (183);
    comparing the cumulative contribution rate with a first threshold value, and removing, from the principal component list (183), a principal component corresponding to a contribution rate added to the cumulative contribution rate, if the cumulative contribution rate is less than the first threshold value;
    calculating characteristic formulas, a normal vector of each of the characteristic formulas representing the principal component included in the principal component list (183) from which the principal component corresponding to the contribution rate added to the cumulative contribution rate has been removed; and
    creating a model of the plant (60) by unifying the characteristic formulas for the clusters, the model of the plant (60) being used for creating operation plan information which represents an operation plan of the plant (60), wherein the plant model creating device (100) transmits the operation plan information to the plant information system (20).

9. The plant model creating method according to claim 8, further comprising:

    adjusting parameters included in the characteristic formula; and
    creating the model of the plant (60) based on the characteristic formula whose parameters has been adjusted.

10. The plant model creating method according to claim 9, further comprising: adjusting at least one of a coefficient and a bias which are included in the characteristic formula, and an upper limit value and a lower limit value of a variable included in the operating data.

11. The plant model creating method according to any one of claims 8 to 10, further comprising:

    creating an energy flow diagram by using the operating data of the plant (60), the energy flow diagram showing energy flow between a plurality of equipment installed in the plant (60); and
    generating operation plan information by using the energy flow diagram and the model.

12. The plant model creating method according to claim 11, further comprising: generating, as the operation plan information, at least one of time series trend of input/output amount of equipment installed in the plant (60), Gantt chart of operation showing start/stop of the equipment, and a cost-saving merit.

13. The plant model creating method according to any one of claims 8 to 12, further comprising:

if an error between an estimate value of the operating data calculated based on the characteristic formula and an actual measurement value of the operating data is greater than a second threshold, increasing a division number of the operating data; and dividing the operating data into clusters again.

14. The plant model creating method according to any one of claims 8 to 13, further comprising: generating, as the model of the plant (60), a piecewise linear approximate formula by unifying two or more characteristic formulas.

15. A non-transitory computer readable storage medium storing one or more plant model creating programs configured for execution by a computer of a plant model creating device (100) which is connectable to a plant information system (20) which manages information of a plant (60), the plant information system (20) being connected via a network (NW) to a controlling/monitoring system (50) controlling and monitoring the plant (60), the one or more programs comprising instructions for:

obtaining, from the plant information system (20), operating data including measurement data measured by equipment installed in the plant (60), the measurement data representing a power consumption of a chiller, a cold water production amount of the chiller, a power generation amount of a gas turbine, or a cold water consumption of the gas turbine, the operating data being transmitted from the equipment to the controlling/monitoring system (50) and transmitted from the controlling/monitoring system (50) via the network (NW) to the plant information system (20);
calculating a Mahalanobis distance based on the operating data, and removing outliers from the operating data based on the Mahalanobis distance;
dividing, into clusters, the operating data from which the outliers have been removed by fitting based on a Gaussian Mixture Model;
calculating a principal component by performing a Principal Component Analysis, and calculating a contribution rate using a dispersion of the principal component, for every cluster;
generating a principal component list (183) including the principal component and the contribution rate;
obtaining the contribution rate from the principal component list (183), and calculating a cumulative contribution rate based on the contribution rate obtained from the principal component list (183);
comparing the cumulative contribution rate with a first threshold value, and removing, from the principal component list (183), a principal component corresponding to a contribution rate added to the cumulative contribution rate, if the cumulative contribution rate is less than the first threshold value;
calculating characteristic formulas, a normal vector of each of the characteristic formulas representing the principal component included in the principal component list (183) from which the principal component corresponding to the contribution rate added to the cumulative contribution rate has been removed; and
creating a model of the plant (60) by unifying the characteristic formulas for the clusters, the model of the plant (60) being used for creating operation plan information which represents an operation plan of the plant (60), wherein the plant model creating device (100) transmits the operation plan information to the plant information system (20).

**Patentansprüche**

1. Eine Anlagenmodellerzeugungsvorrichtung (100), die mit einem Anlageninformationssystem (20) verbunden werden kann, das Informationen einer Anlage (60) verwaltet, wobei das Anlageninformationssystem (20) über ein Netzwerk (NW) mit einem Steuerungs-/Überwachungssystem (50) verbunden ist, das die Anlage (60) steuert und überwacht, wobei die Anlagenmodellerzeugungsvorrichtung (100) einen Hardware-Prozessor aufweist, der ein oder mehrere in einem Speichermedium (160) gespeicherte Programme ausführt, um Folgendes zu implementieren:

einen Betriebsdatenerfasser (120), der konfiguriert ist, um von dem Anlageninformationssystem (20) Betriebsdaten zu erhalten, die Messdaten umfassen, die von einer in der Anlage (60) installierten Ausrüstung gemessen werden, wobei die Messdaten einen Stromverbrauch einer Kältemaschine, eine Kaltwassererzeugungsmenge der Kältemaschine, eine Stromerzeugungsmenge einer Gasturbine oder einen Kaltwasserverbrauch der Gasturbine darstellen, wobei die Betriebsdaten von der Ausrüstung an das Steuerungs-/Überwachungssystem (50) übertragen werden und von dem Steuerungs-/Überwachungssystem (50) über das Netzwerk (NW) an das Anlageninformationssystem (20) übertragen werden;

einen Ausreißer-Entferner (131), der konfiguriert ist, um einen Mahalanobis-Abstand basierend auf den von dem Betriebsdatenerfasser (120) erhaltenen Betriebsdaten zu berechnen, und konfiguriert ist, um Ausreißer aus den Betriebsdaten basierend auf dem Mahalanobis-Abstand zu entfernen;

einen Cluster-Analysator (132), der konfiguriert ist, um die Betriebsdaten, aus denen die Ausreißer durch den Ausreißer-Entferner (131) entfernt wurden, durch Anpassen basierend auf einem Gaußschen Mischungsmodell in Cluster zu unterteilen;

einen Hauptkomponentenlistengenerator (133), der konfiguriert ist, um eine Hauptkomponente zu berechnen, indem eine Hauptkomponentenanalyse durchgeführt wird, und konfiguriert ist, um eine Beitragsrate unter Verwendung einer Streuung der Hauptkomponente für jeden der durch den Clusteranalysator (132) unterteilten Cluster zu berechnen, wobei der Hauptkomponentenlistengenerator (133) konfiguriert ist, um eine Hauptkomponentenliste (183) zu erzeugen, die die Hauptkomponente und die Beitragsrate umfasst;

einen kumulativen Beitragsrechner (134), der konfiguriert ist, um die Beitragsrate aus der von dem Hauptkomponentenlistengenerator (133) erzeugten Hauptkomponentenliste (183) zu erhalten, und konfiguriert ist, um eine kumulative Beitragsrate basierend auf der aus der Hauptkomponentenliste (183) erhaltenen Beitragsrate zu berechnen;

einen Hauptkomponenten-Entferner (135), der konfiguriert ist, um die von dem kumulativen Beitragsrechner (134) berechnete kumulative Beitragsrate mit einem ersten Schwellenwert zu vergleichen, wobei der Hauptkomponenten-Entferner (135) konfiguriert ist, um aus der Hauptkomponentenliste (183) eine Hauptkomponente zu entfernen, die zu einer zur kumulativen Beitragsrate hinzugefügten Beitragsrate korrespondiert, falls die von dem kumulativen Beitragsratenrechner (134) berechnete kumulative Beitragsrate kleiner als der erste Schwellenwert ist;

einen charakteristischen Formelrechner (136), der konfiguriert ist, um charakteristische Formeln für die Cluster zu berechnen, wobei ein Normalvektor jeder der charakteristischen Formeln die Hauptkomponente darstellt, die in der Hauptkomponentenliste (183) enthalten ist, aus der die Hauptkomponente, die zu der zur kumulativen Beitragsrate hinzugefügten Beitragsrate korrespondiert, durch den Hauptkomponenten-Entferner (135) entfernt wurde; und

einen Modellerzeuger (140), der konfiguriert ist, um ein Modell der Anlage (60) durch Vereinheitlichen der charakteristischen Formeln für die Cluster, die durch den charakteristischen Formelrechner (136) berechnet wurden, zu erzeugen, wobei das Modell der Anlage (60) zum Erzeugen von Betriebsplaninformationen verwendet wird, die einen Betriebsplan der Anlage (60) darstellen,

wobei die Anlagenmodellerzeugungsvorrichtung (100) konfiguriert ist, um die Betriebsplaninformationen an das Anlageninformationssystem (20) zu übertragen.

2. Die Anlagenmodellerzeugungsvorrichtung (100) nach Anspruch 1, ferner aufweisend:

einen Parametereinsteller (137), der konfiguriert ist, um Parameter einzustellen, die in der von dem charakteristischen Formelrechner (136) berechneten charakteristischen Formel enthalten sind,

wobei der Modellerzeuger (140) konfiguriert ist, um das Modell der Anlage (60) basierend auf der charakteristischen Formel zu erzeugen, deren Parameter durch den Parametereinsteller (137) eingestellt wurden.

3. Die Anlagenmodellerzeugungsvorrichtung (100) nach Anspruch 2,

wobei der Parametereinsteller (137) konfiguriert ist, um zumindest eines von einem Koeffizienten und einem Bias, die in der charakteristischen Formel enthalten sind, und einem oberen Grenzwert und einem unteren Grenzwert einer in den Betriebsdaten enthaltenen Variablen einzustellen.

4. Die Anlagenmodellerzeugungsvorrichtung (100) nach einem der Ansprüche 1 bis 3, ferner aufweisend:

einen Energieflussdiagrammerzeuger (150), der konfiguriert ist, um ein Energieflussdiagramm unter Verwendung der Betriebsdaten der Anlage (60) zu erzeugen, wobei das Energieflussdiagramm einen Energiefluss zwischen einer Vielzahl von in der Anlage (60) installierter Ausrüstung zeigt; und

einen Betriebsplaninformationsgenerator (170), der konfiguriert ist, um Betriebsplaninformationen unter Verwendung des durch den Energieflussdiagrammerzeuger (150) erzeugten Energieflussdiagramms und des durch den Modellerzeuger (140) erzeugten Modells zu erzeugen.

5. Die Anlagenmodellerzeugungsvorrichtung (100) nach Anspruch 4,

wobei der Betriebsplaninformationsgenerator (170) konfiguriert ist, um als die Betriebsplaninformationen zumindest eines von einem Zeitreihentrend der Eingangs-/Ausgangsmenge der in der Anlage (60) installierten Ausrüstung, einem Gantt-Diagramm des Betriebs, das den Start/Stopp der Ausrüstung zeigt, und einem Kosteneinsparungsmerkmal zu erzeugen.

**6.** Die Anlagenmodellerzeugungsvorrichtung (100) nach einem der Ansprüche 1 bis 5,
wobei, falls ein Fehler zwischen einem basierend auf der charakteristischen Formel berechneten Schätzwert der Betriebsdaten und einem tatsächlichen Messwert der Betriebsdaten größer als ein zweiter Schwellenwert ist, der Clusteranalysator (132) eine Teilungszahl der Betriebsdaten erhöht und die Betriebsdaten erneut in Cluster unterteilt.

**7.** Die Anlagenmodellerzeugungsvorrichtung (100) nach einem der Ansprüche 1 bis 6,
wobei der Modellerzeuger (140) konfiguriert ist, um als das Modell der Anlage (60) eine stückweise lineare Näherungsformel zu erzeugen, indem zwei oder mehr charakteristische Formeln vereinheitlicht werden, die von dem charakteristischen Formelrechner (136) berechnet wurden.

**8.** Ein Anlagenmodellerzeugungsverfahren, das von einer Anlagenmodellerzeugungsvorrichtung (100) durchgeführt wird, die mit einem Anlageninformationssystem (20) verbunden werden kann, das Informationen über eine Anlage (60) verwaltet, wobei das Anlageninformationssystem (20) über ein Netzwerk (NW) mit einem Steuerungs-/Überwachungssystem (50) verbunden ist, das die Anlage (60) steuert und überwacht, wobei das Anlagenmodellerzeugungsverfahren Folgendes aufweist:

Erhalten, von dem Anlageninformationssystem (20), von Betriebsdaten, die Messdaten umfassen, die durch in der Anlage (60) installierte Ausrüstung gemessen werden, wobei die Messdaten einen Stromverbrauch einer Kältemaschine, eine Kaltwassererzeugungsmenge der Kältemaschine, eine Stromerzeugungsmenge einer Gasturbine oder einen Kaltwasserverbrauch der Gasturbine darstellen, wobei die Betriebsdaten von der Ausrüstung zu dem Steuerungs-/Überwachungssystem (50) übertragen werden und von dem Steuerungs-/Überwachungssystem (50) über das Netzwerk (NW) zu dem Anlageninformationssystem (20) übertragen werden;
Berechnen eines Mahalanobis-Abstands basierend auf den Betriebsdaten, und Entfernen von Ausreißern aus den Betriebsdaten basierend auf dem Mahalanobis-Abstand;
Unterteilen der Betriebsdaten, aus denen die Ausreißer entfernt wurden, in Cluster durch Einstellen basierend auf einem Gaußschen Mischungsmodell;
Berechnen einer Hauptkomponente durch Durchführen einer Hauptkomponentenanalyse, und Berechnen einer Beitragsrate unter Verwendung einer Streuung der Hauptkomponente für jedes Cluster;
Erzeugen einer Hauptkomponentenliste (183), die die Hauptkomponente und die Beitragsrate umfasst;
Erhalten der Beitragsrate aus der Hauptkomponentenliste (183), und Berechnen einer kumulativen Beitragsrate basierend auf der aus der Hauptkomponentenliste (183) erhaltenen Beitragsrate;
Vergleichen der kumulativen Beitragsrate mit einem ersten Schwellenwert, und Entfernen einer Hauptkomponente aus der Hauptkomponentenliste (183), die zu einer zur kumulativen Beitragsrate hinzugefügten Beitragsrate korrespondiert, falls die kumulative Beitragsrate kleiner als der erste Schwellenwert ist;
Berechnen charakteristischer Formeln, wobei ein Normalvektor jeder der charakteristischen Formeln die Hauptkomponente darstellt, die in der Hauptkomponentenliste (183) enthalten ist, aus der die Hauptkomponente, die zu der zur kumulativen Beitragsrate hinzugefügten Beitragsrate korrespondiert, entfernt wurde; und
Erzeugen eines Modells der Anlage (60) durch Vereinheitlichen der charakteristischen Formeln für die Cluster, wobei das Modell der Anlage (60) zum Erzeugen von Betriebsplaninformationen verwendet wird, die einen Betriebsplan der Anlage (60) darstellen,
wobei die Anlagenmodellerzeugungsvorrichtung (100) die Betriebsplaninformationen an das Anlageninformationssystem (20) überträgt.

**9.** Das Anlagenmodellerzeugungsverfahren nach Anspruch 8, ferner aufweisend:

Einstellen von Parametern, die in der charakteristischen Formel enthalten sind; und
Erzeugen des Modells der Anlage (60) basierend auf der charakteristischen Formel, deren Parameter eingestellt wurden.

**10.** Das Anlagenmodellerzeugungsverfahren nach Anspruch 9, ferner aufweisend:
Einstellen zumindest eines von einem Koeffizienten und einem Bias, die in der charakteristischen Formel enthalten sind, und einem oberen Grenzwert und einem unteren Grenzwert einer in den Betriebsdaten enthaltenen Variablen.

11. Das Anlagenmodellerzeugungsverfahren nach einem der Ansprüche 8 bis 10, ferner aufweisend:

Erzeugen eines Energieflussdiagramms unter Verwendung der Betriebsdaten der Anlage (60), wobei das Energieflussdiagramm einen Energiefluss zwischen einer Vielzahl von in der Anlage (60) installierter Ausrüstung zeigt; und
Erzeugen von Betriebsplaninformationen unter Verwendung des Energieflussdiagramms und des Modells.

12. Das Anlagenmodellerzeugungsverfahren nach Anspruch 11, ferner aufweisend:
Erzeugen, als die Betriebsplaninformationen, von zumindest einem von einem Zeitreihentrend der Eingangs-/Ausgangsmenge der in der Anlage (60) installierten Ausrüstung, einem Gantt-Diagramm des Betriebs, das den Start/Stopp der Ausrüstung zeigt, und einem Kosteneinsparungsmerkmal.

13. Das Anlagenmodellerzeugungsverfahren nach einem der Ansprüche 8 bis 12, ferner aufweisend:

falls ein Fehler zwischen einem basierend auf der charakteristischen Formel berechneten Schätzwert der Betriebsdaten und einem tatsächlichen Messwert der Betriebsdaten größer als ein zweiter Schwellenwert ist, Erhöhen einer Teilungszahl der Betriebsdaten; und
erneutes Unterteilen der Betriebsdaten in Cluster.

14. Das Anlagenmodellerzeugungsverfahren nach einem der Ansprüche 8 bis 13, ferner aufweisend:
Erzeugen einer stückweisen linearen Näherungsformel als das Modell der Anlage (60) durch Vereinheitlichen von zwei oder mehr charakteristischen Formeln.

15. Ein nicht-transitorisches, computerlesbares Speichermedium, das ein oder mehrere Anlagenmodellerzeugungsprogramme speichert, die zur Ausführung durch einen Computer einer Anlagenmodellerzeugungsvorrichtung (100) konfiguriert sind, die mit einem Anlageninformationssystem (20) verbunden werden kann, das Informationen einer Anlage (60) verwaltet, wobei das Anlageninformationssystem (20) über ein Netzwerk (NW) mit einem Steuerungs-/Überwachungssystem (50) verbunden ist, das die Anlage (60) steuert und überwacht, wobei das eine oder die mehreren Programme Instruktionen aufweisen zum:

Erhalten, von dem Anlageninformationssystem (20), von Betriebsdaten einschließlich Messdaten, die von in der Anlage (60) installierter Ausrüstung gemessen werden, wobei die Messdaten einen Stromverbrauch einer Kältemaschine, eine Kaltwassererzeugungsmenge der Kältemaschine, eine Stromerzeugungsmenge einer Gasturbine oder einen Kaltwasserverbrauch der Gasturbine darstellen, wobei die Betriebsdaten von der Ausrüstung an das Steuerungs-/Überwachungssystem (50) übertragen werden und von dem Steuerungs-/Überwachungssystem (50) über das Netzwerk (NW) an das Anlageninformationssystem (20) übertragen werden;
Berechnen eines Mahalanobis-Abstands basierend auf den Betriebsdaten, und Entfernen von Ausreißern aus den Betriebsdaten basierend auf dem Mahalanobis-Abstand;
Unterteilen der Betriebsdaten, aus denen die Ausreißer entfernt wurden, in Cluster durch Anpassen basierend auf einem Gaußschen Mischungsmodell;
Berechnen einer Hauptkomponente durch Durchführen einer Hauptkomponentenanalyse, und Berechnen einer Beitragsrate unter Verwendung einer Streuung der Hauptkomponente für jedes Cluster;
Erzeugen einer Hauptkomponentenliste (183), die die Hauptkomponente und die Beitragsrate umfasst;
Erhalten der Beitragsrate aus der Hauptkomponentenliste (183), und Berechnen einer kumulativen Beitragsrate basierend auf der aus der Hauptkomponentenliste (183) erhaltenen Beitragsrate;
Vergleichen der kumulativen Beitragsrate mit einem ersten Schwellenwert, und Entfernen einer Hauptkomponente aus der Hauptkomponentenliste (183), die zu einer zur kumulativen Beitragsrate hinzugefügten Beitragsrate korrespondiert, falls die kumulative Beitragsrate kleiner als der erste Schwellenwert ist;
Berechnen charakteristischer Formeln, wobei ein Normalvektor jeder der charakteristischen Formeln die Hauptkomponente darstellt, die in der Hauptkomponentenliste (183) enthalten ist, aus der die Hauptkomponente, die zu der zur kumulativen Beitragsrate hinzugefügten Beitragsrate korrespondiert, entfernt wurde; und
Erzeugen eines Modells der Anlage (60) durch Vereinheitlichen der charakteristischen Formeln für die Cluster, wobei das Modell der Anlage (60) zum Erzeugen von Betriebsplaninformationen verwendet wird, die einen Betriebsplan der Anlage (60) darstellen,
wobei die Anlagenmodellerzeugungsvorrichtung (100) die Betriebsplaninformationen an das Anlageninformationssystem (20) überträgt.

**Revendications**

1. Dispositif de création de modèle d'usine (100) qui peut être relié à un système d'informations d'usine (20) qui gère des informations d'une usine (60), le système d'informations d'usine (20) étant relié via un réseau (NW) à un système de commande/surveillance (50) commandant et surveillant l'usine (60), le dispositif de création de modèle d'usine (100) comprenant un processeur matériel exécutant un ou plusieurs programmes stockés dans un support de stockage (160) pour mettre en œuvre :

   un dispositif d'obtention de données de fonctionnement (120) configuré pour obtenir, depuis le système d'informations d'usine (20), des données de fonctionnement comportant des données de mesure mesurées par des équipements installés dans l'usine (60), les données de mesure représentant une consommation de puissance d'un refroidisseur, une quantité de production d'eau froide du refroidisseur, une quantité de génération de puissance d'une turbine à gaz, ou une consommation d'eau froide de la turbine à gaz, les données de fonctionnement étant transmises depuis les équipements au système de commande/surveillance (50) et transmises depuis le système de commande/surveillance (50) via le réseau (NW) au système d'informations d'usine (20) ;
   un dispositif de suppression de valeurs aberrantes (131) configuré pour calculer une distance de Mahalanobis sur la base des données de fonctionnement obtenues par le dispositif d'obtention de données de fonctionnement (120), et configuré pour supprimer des valeurs aberrantes des données de fonctionnement sur la base de la distance de Mahalanobis ;
   un analyseur de groupe (132) configuré pour diviser, en groupes, les données de fonctionnement desquelles les valeurs aberrantes ont été supprimées par le dispositif de suppression de valeurs aberrantes (131) par adaptation sur la base d'un modèle de mélange gaussien ;
   un générateur de liste de composantes principales (133) configuré pour calculer une composante principale par la réalisation d'une analyse en composantes principales et configuré pour calculer un taux de contribution en utilisant une dispersion de la composante principale, pour chacun des groupes divisés par l'analyseur de groupe (132), le générateur de liste de composantes principales (133) étant configuré pour générer une liste de composantes principales (183) comportant la composante principale et le taux de contribution ;
   un calculateur de taux de contribution cumulé (134) configuré pour obtenir le taux de contribution depuis la liste de composantes principales (183) générée par le générateur de liste de composantes principales (133), et configuré pour calculer un taux de contribution cumulé sur la base du taux de contribution obtenu depuis la liste de composantes principales (183) ;
   un dispositif de suppression de composante principale (135) configuré pour comparer le taux de contribution cumulé calculé par le calculateur de taux de contribution cumulé (134) à une première valeur de seuil, le dispositif de suppression de composante principale (135) étant configuré pour supprimer, de la liste de composantes principales (183), une composante principale correspondant à un taux de contribution ajouté au taux de contribution cumulé, si le taux de contribution cumulé calculé par le calculateur de taux de contribution cumulé (134) est inférieur à la première valeur de seuil ;
   un calculateur de formules caractéristiques (136) configuré pour calculer des formules caractéristiques pour les groupes, un vecteur normal de chacune des formules caractéristiques représentant la composante principale comprise dans la liste de composantes principales (183) de laquelle la composante principale correspondant au taux de contribution ajouté au taux de contribution cumulé a été supprimée par le dispositif de suppression de composante principale (135) ; et
   un créateur de modèle (140) configuré pour créer un modèle de l'usine (60) par l'unification des formules caractéristiques pour les groupes calculées par le calculateur de formules caractéristiques (136), le modèle de l'usine (60) étant utilisé pour créer des informations de plan de fonctionnement qui représentent un plan de fonctionnement de l'usine (60),
   dans lequel le dispositif de création de modèle d'usine (100) est configuré pour transmettre les informations de plan de fonctionnement au système d'informations d'usine (20).

2. Dispositif de création de modèle d'usine (100) selon la revendication 1, comprenant en outre :

   un dispositif d'ajustement de paramètres (137) configuré pour ajuster des paramètres compris dans la formule caractéristique calculée par le calculateur de formules caractéristiques (136),
   dans lequel le créateur de modèle (140) est configuré pour créer le modèle de l'usine (60) sur la base de la formule caractéristique de laquelle des paramètres ont été ajustés par le dispositif d'ajustement de paramètres (137).

**3.** Dispositif de création de modèle d'usine (100) selon la revendication 2, dans lequel le dispositif d'ajustement de paramètres (137) est configuré pour ajuster au moins l'un parmi un coefficient et un biais qui sont compris dans la formule caractéristique, et une valeur de limite supérieure et une valeur de limite inférieure d'une variable comprise dans les données de fonctionnement.

**4.** Dispositif de création de modèle d'usine (100) selon l'une quelconque des revendications 1 à 3, comprenant en outre :

un créateur de diagramme de flux d'énergie (150) configuré pour créer un diagramme de flux d'énergie par l'utilisation des données de fonctionnement de l'usine (60), le diagramme de flux d'énergie représentant un flux d'énergie entre une pluralité d'équipements installés dans l'usine (60) ; et
un générateur d'informations de plan de fonctionnement (170) configuré pour générer des informations de plan de fonctionnement par l'utilisation du diagramme de flux d'énergie créé par le créateur de diagramme de flux d'énergie (150) et du modèle créé par le créateur de modèle (140).

**5.** Dispositif de création de modèle d'usine (100) selon la revendication 4,
dans lequel le générateur d'informations de plan de fonctionnement (170) est configuré pour générer, en tant que les informations de plan de fonctionnement, au moins l'un parmi une tendance de séries chronologiques de quantité d'entrée/sortie d'équipements installés dans l'usine (60), un diagramme de Gantt de fonctionnement représentant un démarrage/arrêt des équipements, et un mérite d'économies de coûts.

**6.** Dispositif de création de modèle d'usine (100) selon l'une quelconque des revendications 1 à 5,
dans lequel, si une erreur entre une valeur d'estimation des données de fonctionnement calculée sur la base de la formule caractéristique et une valeur de mesure réelle des données de fonctionnement est supérieure à un deuxième seuil, l'analyseur de groupe (132) augmente un nombre de divisions des données de fonctionnement et divise à nouveau les données de fonctionnement en groupes.

**7.** Dispositif de création de modèle d'usine (100) selon l'une quelconque des revendications 1 à 6,
dans lequel le créateur de modèle (140) est configuré pour générer, en tant que le modèle de l'usine (60), une formule d'approximation linéaire par morceaux par l'unification de deux formules caractéristiques ou plus calculées par le calculateur de formules caractéristiques (136).

**8.** Procédé de création de modèle d'usine qui est réalisé par un dispositif de création de modèle d'usine (100) qui peut être relié à un système d'informations d'usine (20) qui gère des informations d'une usine (60), le système d'informations d'usine (20) étant relié via un réseau (NW) à un système de commande/surveillance (50) commandant et surveillant l'usine (60), le procédé de création de modèle d'usine comprenant :

l'obtention, depuis le système d'informations d'usine (20), de données de fonctionnement comportant des données de mesure mesurées par des équipements installés dans l'usine (60), les données de mesure représentant une consommation de puissance d'un refroidisseur, une quantité de production d'eau froide du refroidisseur, une quantité de génération de puissance d'une turbine à gaz, ou une consommation d'eau froide de la turbine à gaz, les données de fonctionnement étant transmises depuis les équipements au système de commande/surveillance (50) et transmises depuis le système de commande/surveillance (50) via le réseau (NW) au système d'informations d'usine (20) ;
le calcul d'une distance de Mahalanobis sur la base des données de fonctionnement, et la suppression de valeurs aberrantes des données de fonctionnement sur la base de la distance de Mahalanobis ;
la division, en groupes, des données de fonctionnement desquelles les valeurs aberrantes ont été supprimées par adaptation sur la base d'un modèle de mélange gaussien ;
le calcul d'une composante principale par la réalisation d'une analyse en composantes principales et le calcul d'un taux de contribution en utilisant une dispersion de la composante principale, pour chaque groupe ;
la génération d'une liste de composantes principales (183) comportant la composante principale et le taux de contribution ;
l'obtention du taux de contribution depuis la liste de composantes principales (183) et le calcul d'un taux de contribution cumulé sur la base du taux de contribution obtenu depuis la liste de composantes principales (183) ;
la comparaison du taux de contribution cumulé à une première valeur de seuil, et la suppression, de la liste de composantes principales (183), d'une composante principale correspondant à un taux de contribution ajouté au taux de contribution cumulé, si le taux de contribution cumulé est inférieur à la première valeur de seuil ;
le calcul de formules caractéristiques, d'un vecteur normal de chacune des formules caractéristiques représentant la composante principale compris dans la liste de composantes principales (183) de laquelle la composante principale correspondant au taux de contribution ajouté au taux de contribution cumulé a été supprimée ; et

la création d'un modèle de l'usine (60) par l'unification des formules caractéristiques pour les groupes, le modèle de l'usine (60) étant utilisé pour créer des informations de plan de fonctionnement qui représentent un plan de fonctionnement de l'usine (60),

dans lequel le dispositif de création de modèle d'usine (100) transmet les informations de plan de fonctionnement au système d'informations d'usine (20).

**9.** Procédé de création de modèle d'usine selon la revendication 8, comprenant en outre :

l'ajustement de paramètres compris dans la formule caractéristique ; et

la création du modèle de l'usine (60) sur la base de la formule caractéristique de laquelle des paramètres ont été ajustés.

**10.** Procédé de création de modèle d'usine selon la revendication 9, comprenant en outre :
l'ajustement d'au moins l'un parmi un coefficient et un biais qui sont compris dans la formule caractéristique, et une valeur de limite supérieure et une valeur de limite inférieure d'une variable comprise dans les données de fonctionnement.

**11.** Procédé de création de modèle d'usine selon l'une quelconque des revendications 8 à 10, comprenant en outre :

la création d'un diagramme de flux d'énergie par l'utilisation des données de fonctionnement de l'usine (60), le diagramme de flux d'énergie représentant un flux d'énergie entre une pluralité d'équipements installés dans l'usine (60) ; et

la génération d'informations de plan de fonctionnement par l'utilisation du diagramme de flux d'énergie et du modèle.

**12.** Procédé de création de modèle d'usine selon la revendication 11, comprenant en outre :
la génération, en tant que les informations de plan de fonctionnement, d'au moins l'un parmi une tendance de séries chronologiques de quantité d'entrée/sortie d'équipements installés dans l'usine (60), un diagramme de Gantt de fonctionnement représentant un démarrage/arrêt des équipements, et un mérite d'économies de coûts.

**13.** Procédé de création de modèle d'usine selon l'une quelconque des revendications 8 à 12, comprenant en outre :

si une erreur entre une valeur d'estimation des données de fonctionnement calculée sur la base de la formule caractéristique et une valeur de mesure réelle des données de fonctionnement est supérieure à un deuxième seuil,

l'augmentation d'un nombre de divisions des données de fonctionnement ; et

la division à nouveau des données de fonctionnement en groupes.

**14.** Procédé de création de modèle d'usine selon l'une quelconque des revendications 8 à 13, comprenant en outre :
la génération, en tant que le modèle de l'usine (60), d'une formule d'approximation linéaire par morceaux par l'unification de deux formules caractéristiques ou plus.

**15.** Support de stockage non transitoire lisible par ordinateur stockant un ou plusieurs programmes de création de modèle d'usine configurés pour être exécutés par un ordinateur d'un dispositif de création de modèle d'usine (100) qui peut être relié à un système d'informations d'usine (20) qui gère des informations d'une usine (60), le système d'informations d'usine (20) étant relié via un réseau (NW) à un système de commande/surveillance (50) commandant et surveillant l'usine (60), les un ou plusieurs programmes comprenant des instructions pour :

l'obtention, depuis le système d'informations d'usine (20), de données de fonctionnement comportant des données de mesure mesurées par des équipements installés dans l'usine (60), les données de mesure représentant une consommation de puissance d'un refroidisseur, une quantité de production d'eau froide du refroidisseur, une quantité de génération de puissance d'une turbine à gaz, ou une consommation d'eau froide de la turbine à gaz, les données de fonctionnement étant transmises depuis les équipements au système de commande/surveillance (50) et transmises depuis le système de commande/surveillance (50) via le réseau (NW) au système d'informations d'usine (20) ;

le calcul d'une distance de Mahalanobis sur la base des données de fonctionnement, et la suppression de valeurs aberrantes des données de fonctionnement sur la base de la distance de Mahalanobis ;

la division, en groupes, des données de fonctionnement desquelles les valeurs aberrantes ont été supprimées par adaptation sur la base d'un modèle de mélange gaussien ;

le calcul d'une composante principale par la réalisation d'une analyse en composantes principale, et le calcul d'un taux de contribution en utilisant une dispersion de la composante principale, pour chaque groupe ;

la génération d'une liste de composantes principales (183) comportant la composante principale et le taux de contribution ;

l'obtention du taux de contribution depuis la liste de composantes principales (183), et le calcul d'un taux de contribution cumulé sur la base du taux de contribution obtenu depuis la liste de composantes principales (183) ;

la comparaison du taux de contribution cumulé à une première valeur de seuil, et la suppression, de la liste de composantes principales (183), d'une composante principale correspondant à un taux de contribution ajouté au taux de contribution cumulé, si le taux de contribution cumulé est inférieur à la première valeur de seuil ;

le calcul des formules caractéristiques, un vecteur normal de chacune des formules caractéristiques représentant la composante principale comprise dans la liste de composantes principales (183) de laquelle la composante principale correspondant au taux de contribution ajouté au taux de contribution cumulé a été supprimée ; et

la création d'un modèle de l'usine (60) par l'unification des formules caractéristiques pour les groupes, le modèle de l'usine (60) étant utilisé pour créer des informations de plan de fonctionnement qui représentent un plan de fonctionnement de l'usine (60),

dans lequel le dispositif de création de modèle d'usine (100) transmet les informations de plan de fonctionnement au système d'informations d'usine (20).

# FIG. 1

# FIG. 2

OPERATION PLAN CREATING SYSTEM — 10

100

PLANT MODEL CREATING DEVICE

110 — INTERFACE

120 — OPERATING DATA OBTAINER

130 — OPERATION CHARACTERISTICS ANALYZER

140 — MODEL CREATOR

150 — ENERGY FLOW DIAGRAM CREATOR

160 — STORAGE

170 — OPERATION PLAN INFORMATION GENERATOR

OPERATING DATA

SETTING INFORMATION

OPERATION PLAN INFORMATION

PLANT INFORMATION SYSTEM — 20

# FIG. 3

PLANT MODEL CREATING DEVICE ~100

Components (130): 133, 134, 135, 136, 137

| OUTLIER REMOVER (131) | CLUSTER ANALYZER (132) | PRINCIPAL COMPONENT LIST GENERATOR (133) | CUMULATIVE CONTRIBUTION RATE CALCULATOR (134) | PRINCIPAL COMPONENT REMOVER (135) | CHARACTERISTIC FORMULA CALCULATOR (136) | PARAMETER ADJUSTER (137) |

MODEL CREATOR (140)

ENERGY FLOW DIAGRAM CREATOR (150)

Data stores (180): OPERATING DATA (181), CLUSTERING INFORMATION (182), PRINCIPAL COMPONENT LIST (183), CHARACTERISTIC ANALYSIS SHEET (184)

Data stores (190): INPUT/OUTPUT SHEET (191), PLANT MODEL INFORMATION (192), ENERGY FLOW DIAGRAM (193)

OPERATING DATA OBTAINER (120)

OPERATION PLAN INFORMATION GENERATOR ~170

EP 3 166 057 B1

23

# FIG. 4

<u>181</u>

| | ID NO. | ID1 | ID2 | ID3 | ID4 |
|---|---|---|---|---|---|
| 181a | ID NO. | ID1 | ID2 | ID3 | ID4 |
| 181b | Tag Name | *****.PV | *****.PV | *****.PV | *****.PV |
| 181c | Equipment Name | Chiller | Chiller | Gas turbine cogeneration | Gas turbine cogeneration |
| 181d | Comment 1 | Electricity | Cold Water | Electricity | Cold Water |
| 181e | Comment 2 | Consumption | Production | Generation | Consumption |
| 181f | Unit | kW | ton/h | kW | ton/h |
| 181g | 2015/01/01 00:00 | 71.71204573 | 9.810946341 | 20.31335305 | 93.95220743 |
| | 2015/01/01 01:00 | 69.23071971 | 9.420036075 | 20.80557950 | 98.08879069 |
| | 2015/01/01 02:00 | 70.32641281 | 9.450000006 | 20.62117278 | 99.77931829 |
| | 2015/01/01 03:00 | 67.49996169 | 9.817940917 | 21.26891600 | 101.4116217 |
| | 2015/01/01 04:00 | 66.85879119 | 9.798197856 | 21.50882221 | 99.35094615 |

EP 3 166 057 B1

FIG. 5

FIG. 6

FIG. 7

FIG. 8

# FIG. 9

EP 3 166 057 B1

|       |                      |            | PRINCIPAL COMPONENT (COEFFICIENT C OF CHARACTERISTIC FORMULA) | | | | |
| No    | CONTRIBUTION RATE    | EIGENVALUE | $x_1$ | $x_2$ | $x_3$ | $x_4$ | $x_5$ |
|-------|----------------------|------------|--------|--------|--------|--------|--------|
| 1     | 0. 7232              | 3. 616     | 0. 516 | 0. 521 | 0. 432 | 0. 193 | 0. 488 |
| 2     | 0. 1980              | 0. 990     | −0. 127| 0. 025 | 0. 094 | 0. 926 | −0. 343|
| 3     | 0. 0786              | 0. 393     | 0. 237 | 0. 213 | −0. 895| 0. 205 | 0. 234 |
| 4     | 0. 0002              | 0. 001     | 0. 804 | −0. 496| 0. 010 | 0. 002 | −0. 329|
| 5     | 0. 0001              | 0. 0005    | 0. 125 | 0. 661 | −0. 049| −0. 253| −0. 694|

183a　183b　183c　183　183d

FIG. 10

FIG. 11

FIG. 12

EP 3 166 057 B1

FIG. 13

ENERGY BALANCE (ELECTRIC POWER)

# FIG. 14

| DEVICE NAME | 0:00 | 1:00 | 2:00 | 3:00 | 4:00 | 5:00 | 6:00 | 7:00 | 8:00 | 9:00 | 10:00 | 11:00 | 12:00 | 13:00 | 14:00 | 15:00 | 16:00 | 17:00 | 18:00 | 19:00 | 20:00 | 21:00 | 22:00 | 23:00 |
|---|---|---|---|---|---|---|---|---|---|---|---|---|---|---|---|---|---|---|---|---|---|---|---|---|
| STEAM-TURBINE POWER GENERATOR 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| STEAM-TURBINE POWER GENERATOR 2 | 1 | 1 | 1 | 1 | 1 | 1 | 1 | 1 | 1 | 1 | 1 | 1 | 1 | 1 | 1 | 1 | 0 | 0 | 0 | 0 | 0 | 0 | 0 | 0 |
| GAS-TURBINE POWER GENERATOR 1 | 0 | 0 | 0 | 0 | 0 | 0 | 0 | 0 | 0 | 0 | 1 | 1 | 1 | 1 | 1 | 1 | 1 | 1 | 1 | 1 | 1 | 0 | 0 | 0 |
| COGENERATION POWER GENERATOR 1 | 0 | 0 | 0 | 0 | 0 | 1 | 1 | 1 | 1 | 1 | 1 | 1 | 1 | 1 | 1 | 1 | 1 | 1 | 1 | 1 | 1 | 1 | 0 | 0 |
| GAS BOILER 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| GAS BOILER 2 | 0 | 0 | 0 | 1 | 1 | 1 | 1 | 1 | 1 | 1 | 1 | 1 | 1 | 1 | 1 | 1 | 1 | 1 | 1 | 1 | 1 | 1 | 1 | 0 |
| COAL BOILER 1 | 0 | 0 | 0 | 0 | 0 | 0 | 1 | 1 | 1 | 1 | 1 | 1 | 1 | 1 | 1 | 1 | 1 | 1 | 1 | 1 | 1 | 0 | 0 | 0 |
| COAL BOILER 2 | 0 | 0 | 0 | 0 | 0 | 0 | 0 | 1 | 1 | 1 | 1 | 1 | 1 | 1 | 1 | 1 | 0 | 0 | 0 | 0 | 0 | 0 | 0 | 0 |
| HEAVY OIL BOILER 1 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 0 | 0 |
| EXHAUST HEAT BOILER 1 | 0 | 0 | 0 | 0 | 0 | 0 | 0 | 0 | 0 | 0 | 0 | 1 | 1 | 1 | 1 | 1 | 1 | 1 | 1 | 1 | 0 | 0 | 0 | 0 |
| WATER-SUPPLY HEATER 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| WATER-SUPPLY HEATER 2 | 0 | 0 | 0 | 1 | 1 | 1 | 1 | 1 | 1 | 1 | 1 | 1 | 1 | 1 | 1 | 1 | 1 | 1 | 1 | 1 | 1 | 1 | 1 | 0 |
| WATER-SUPPLY HEATER 3 | 0 | 0 | 0 | 0 | 0 | 0 | 1 | 1 | 1 | 1 | 1 | 1 | 1 | 1 | 1 | 1 | 1 | 1 | 1 | 1 | 1 | 0 | 0 | 0 |
| GAS HEATER 1 | 0 | 0 | 0 | 0 | 0 | 0 | 0 | 1 | 1 | 1 | 1 | 1 | 1 | 1 | 1 | 1 | 0 | 0 | 0 | 0 | 0 | 0 | 0 | 0 |
| GAS HEATER 2 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 0 | 0 |
| STEAM ABSORBING FREEZER 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| STEAM ABSORBING FREEZER 2 | 0 | 0 | 0 | 1 | 1 | 1 | 1 | 1 | 1 | 1 | 1 | 1 | 1 | 1 | 1 | 1 | 1 | 1 | 1 | 1 | 1 | 1 | 1 | 0 |
| CHILLER 1 | 0 | 0 | 0 | 0 | 0 | 0 | 1 | 1 | 1 | 1 | 1 | 1 | 1 | 1 | 1 | 1 | 1 | 1 | 1 | 1 | 1 | 0 | 0 | 0 |
| CHILLER 2 | 0 | 0 | 0 | 0 | 0 | 0 | 0 | 1 | 1 | 1 | 1 | 1 | 1 | 1 | 1 | 1 | 0 | 0 | 0 | 0 | 0 | 0 | 0 | 0 |
| HEAT PUMP 1 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 0 | 0 |
| HEAT EXCHANGER 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| HEAT EXCHANGER 2 | 0 | 0 | 0 | 1 | 1 | 1 | 1 | 1 | 1 | 1 | 1 | 1 | 1 | 1 | 1 | 1 | 1 | 1 | 1 | 1 | 1 | 1 | 1 | 0 |
| HEAT EXCHANGER 3 | 0 | 0 | 0 | 0 | 0 | 0 | 0 | 0 | 1 | 1 | 1 | 1 | 1 | 1 | 1 | 1 | 1 | 1 | 1 | 0 | 0 | 0 | 0 | 0 |

EP 3 166 057 B1

# FIG. 15

ENERGY COSTS

COST SAVING : ¥542 [ten-thousand yen/day]

Y axis: ENERGY COSTS [ten-thousand yen/day]
Y axis values: ¥6,000 / ¥5,000 / ¥4,000 / ¥3,000 / ¥2,000 / ¥1,000 / ¥0

ACTUAL VALUE: ¥5,407
OPTIMAL VALUE: ¥4,866

## FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015217814 A
- JP 2015062102 A

- EP 2144197 A1